# EUROPEAN PATENT APPLICATION

(11) **EP 4 625 440 A1**
(43) Date of publication of application: **01.10.2025**
(21) Application number: 23897793.8
(22) Date of filing: 29.11.2023
(51) Int. Cl.: H01B 1/06, H01B 1/10, H01G 11/30, H01G 11/56, H01M 4/13, H01M 4/36, H01M 4/62, H01M 10/052, H01M 10/0562

(54) **SOLID ELECTROLYTE, SOLID ELECTROLYTE FOR POSITIVE ELECTRODE, COMPOSITE, POSITIVE ELECTRODE FOR POWER STORAGE ELEMENT, AND POWER STORAGE ELEMENT**

(30) Priority: 30.11.2022 JP 2022192318; 30.11.2022 JP 2022192324
(71) Applicant: GS Yuasa International Ltd., Kisshoin, Minami-ku, Kyoto-shi, Kyoto 601-8520 (JP)
(72) Inventor: FUKUSHIMA Akihiro, Kyoto-shi, Kyoto 601-8520 (JP); SUYAMA Motoshi, Kyoto-shi, Kyoto 601-8520 (JP); UMEDA Tomohito, Kyoto-shi, Kyoto 601-8520 (JP); YOSHIKAWA Daisuke, Kyoto-shi, Kyoto 601-8520 (JP); YAMAKAJI Masaki, Kyoto-shi, Kyoto 601-8520 (JP)
(74) Representative: Isarpatent
(86) International application number: PCT/JP2023/042636
(87) International publication number: WO 2024/117146

(57) **Abstract**

A solid electrolyte according to one aspect of the present invention contains a sulfur element, a nitrogen element, and a chlorine element, and includes at least one crystal structure between a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKa radiation, any of the different diffraction peaks being a maximum diffraction peak, and an argyrodite-type crystal structure.

## Description

### TECHNICAL FIELD

The present invention relates to a solid electrolyte, a solid electrolyte for a positive electrode, a composite, a positive electrode for an energy storage device, and an energy storage device.

### BACKGROUND ART

Nonaqueous electrolyte secondary batteries typified by lithium ion secondary batteries are, due to the high energy density thereof, widely used for electronic devices such as a personal computer and a communication terminal, motor vehicles, and the like. The nonaqueous electrolyte secondary batteries generally include: an electrode assembly including a pair of electrodes and a separator; a nonaqueous electrolyte; and a case that houses these electrode assembly and nonaqueous electrolyte, and the nonaqueous electrolyte secondary batteries are configured to be charged or discharged through delivery of charge transport ions between the two electrodes. Capacitors such as a lithium ion capacitor and an electric double layer capacitor are also widely used as nonaqueous electrolyte energy storage devices other than the nonaqueous electrolyte secondary batteries.

In recent years, energy storage devices have been proposed in which a solid electrolyte such as a sulfide solid electrolyte is, as a nonaqueous electrolyte, used in place of a nonaqueous electrolyte solution obtained by dissolving an electrolyte salt in a liquid such as an organic solvent. Patent Document 1 describes a sulfide solid electrolyte characterized by having the composition represented by the general formula xLi₂S-25P₂S₅-yLi₃N (10 ≤ y ≤ 15, 67.5 ≤ x + y ≤ 85), and being a crystalline material. Patent Document 2 describes a sulfide solid electrolyte containing an aluminum element and a nitrogen element, and having a crystal structure.

### PRIOR ART DOCUMENTS

### PATENT DOCUMENTS

Patent Document 1: JP-A-2018-41671
Patent Document 2: WO 2020/045633 A

### SUMMARY OF THE INVENTION

### PROBLEMS TO BE SOLVED BY THE INVENTION

Patent Document 1 indicates that, by a sulfide solid electrolyte containing a nitrogen element, generation of hydrogen sulfide caused by the sulfide solid electrolyte contacting with moisture can be suppressed. Patent Document 2 indicates that, by a sulfide solid electrolyte containing an aluminum element and a nitrogen element, reduction resistance is improved. However, when a solid electrolyte containing a nitrogen element is used for a positive electrode or the like of an energy storage device, the energy storage device does not always have sufficient charge-discharge performance.

In addition, conventional sulfide solid electrolytes sometimes do not have sufficient oxidation resistance. Therefore, the sulfide solid electrolytes are, as solid electrolytes used for positive electrodes, expected to be improved in oxidation resistance.

An object of the present invention is to provide: a solid electrolyte that enables an energy storage device to exhibit good charge-discharge performance when the solid electrolyte is used for a positive electrode or the like of the energy storage device; and a positive electrode for an energy storage device, and an energy storage device, each including this solid electrolyte.

An object of the present invention is to provide: a solid electrolyte for a positive electrode, the solid electrolyte having higher oxidation resistance; and a composite, a positive electrode for an energy storage device, and an energy storage device, each including this solid electrolyte.

### MEANS FOR SOLVING THE PROBLEMS

A solid electrolyte (X) according to one aspect of the present invention contains a sulfur element, a nitrogen element, and a chlorine element, and has at least one crystal structure between a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKα radiation, any of the different diffraction peaks being a maximum diffraction peak, and an argyrodite-type crystal structure.

A solid electrolyte (A) according to another aspect of the present invention contains a sulfur element, a nitrogen element, and a chlorine element, and has a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKα radiation, any of the different diffraction peaks being a maximum diffraction peak.

A composite according to another aspect of the present invention is formed from a positive active material and the solid electrolyte (X) for a positive electrode.

A positive electrode, according to another aspect of the present invention, for an energy storage device contains the solid electrolyte (X).

An energy storage device according to another aspect of the present invention contains the solid electrolyte (X).

A solid electrolyte (B) according to another aspect of the present invention is represented by the following formula (1), and has a crystal structure.

AₐPS_{b}M_{c}N_{d}ClₑX_{f} ··· (1)

In the formula (1), A is at least one selected from the group consisting of Li, Na, and K. M is at least one selected from the group consisting of Al, Ta, Si, Sc, Mg, Nb, B, Hf, C, Zr, and Ti. X is at least one element other than A, P, S, M, N, and Cl. a, b, c, d, e, and f respectively satisfy 2 ≤ a ≤ 4, 2 ≤ b ≤ 5, 0 ≤ c ≤ 1, 0.01 ≤ d ≤ 2, 0.01 ≤ e ≤ 1, and 0 ≤ f ≤ 1.

A positive electrode, according to another aspect of the present invention, for an energy storage device contains the solid electrolyte (A) or (B).

An energy storage device according to another aspect of the present invention contains the solid electrolyte (A) or (B).

A solid electrolyte (C), according to another aspect of the present invention, for a positive electrode contains a sulfur element, a nitrogen element, and a chlorine element, and has at least one crystal structure between a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKα radiation, any of the different diffraction peaks being a maximum diffraction peak, and an argyrodite-type crystal structure.

A solid electrolyte (D), according to another aspect of the present invention, for a positive electrode is represented by the following formula (2), and has a crystal structure.

AₐPS_{b}M_{c}N_{d}ClₑX_{f} ··· (2)

In the formula (2), A is at least one selected from the group consisting of Li, Na, and K. M is at least one selected from the group consisting of Al, Ta, Si, Sc, Mg, Nb, B, Hf, C, Zr, and Ti. X is at least one element other than A, P, S, M, N, and Cl. a, b, c, d, e, and f respectively satisfy 2 ≤ a ≤ 7, 2 ≤ b ≤ 6, 0 ≤ c ≤ 1, 0.01 ≤ d ≤ 2, 0.01 ≤ e ≤ 2, and 0 ≤ f ≤ 1.

A composite according to another aspect of the present invention is formed from a positive active material and the solid electrolyte (C) or (D) for a positive electrode.

A positive electrode, according to another aspect of the present invention, for an energy storage device contains the solid electrolyte (C) or (D) for a positive electrode.

An energy storage device according to another aspect of the present invention contains the solid electrolyte (C) or (D) for a positive electrode.

### ADVANTAGES OF THE INVENTION

Any one of the aspects of the present invention can provide: a solid electrolyte that enables an energy storage device to exhibit good charge-discharge performance when the solid electrolyte is used for a positive electrode or the like of the energy storage device; and a positive electrode for an energy storage device, and an energy storage device, each including this solid electrolyte.

Any one of the aspects of the present invention can provide: a solid electrolyte for a positive electrode, the solid electrolyte having higher oxidation resistance; and a composite, a positive electrode for an energy storage device, and an energy storage device, each including this solid electrolyte.

### BRIEF DESCRIPTION OF THE DRAWINGS

Fig. 1 is a schematic cross-sectional diagram of an all-solid-state battery as one embodiment of an energy storage device according to the present invention.
Fig. 2 is a schematic diagram illustrating an energy storage apparatus configured by assembling a plurality of energy storage devices according to one embodiment of the present invention.
Fig. 3 is X-ray diffraction diagrams of solid electrolytes of Examples 1 and 2 and Comparative Examples 1 and 2.
Fig. 4 is X-ray diffraction diagrams of solid electrolytes of Example 5 and Comparative Example 5.
Fig. 5 is X-ray diffraction diagrams of solid electrolytes of Example 6 and Comparative Example 6.
Fig. 6 is X-ray diffraction diagrams of solid electrolytes of Examples 7 and 8 and Comparative Example 7.

### MODE FOR CARRYING OUT THE INVENTION

First, the outline of a solid electrolyte, a solid electrolyte for a positive electrode, a composite, a positive electrode for an energy storage device, and an energy storage device, each disclosed in the present specification, will be described.

[1] A solid electrolyte according to one aspect of the present invention contains a sulfur element, a nitrogen element, and a chlorine element, and has at least one crystal structure between a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKα radiation, any of the different diffraction peaks being a maximum diffraction peak, and an argyrodite-type crystal structure.

The solid electrolyte according to [1] enables an energy storage device to exhibit good charge-discharge performance when the solid electrolyte is used for a positive electrode or the like of the energy storage device. The reason therefor is not clear, but the following reason is presumed. A conventional sulfide solid electrolyte containing a nitrogen element is considered to have low oxidation resistance due to the nitrogen element contained, and when this conventional sulfide solid electrolyte is used for a positive electrode or the like of an energy storage device, the energy storage device does not exhibit sufficient charge-discharge performance. In contrast, the solid electrolyte according to [1] containing a chlorine element together with a nitrogen element, and having a prescribed crystal structure has higher oxidation resistance, presumably resulting in enabling an energy storage device to exhibit good charge-discharge performance when the solid electrolyte is used for a positive electrode or the like of the energy storage device.

The phrase "X-ray diffraction diagram using CuKα radiation" means an X-ray diffraction diagram obtained by the following powder X-ray diffraction measurement. An airtight sample holder for X-ray diffraction measurement is filled with a solid electrolyte powder to be measured, under an argon atmosphere with a dew point of -50°C or lower. The powder X-ray diffraction measurement is performed using an X-ray diffractometer ("MiniFlex II" from Rigaku Holdings Corporation). With CuKα radiation used as a radiation source, and at a tube voltage of 30 kV and a tube current of 15 mA, the diffracted X-ray is made to pass through a Kβ filter of 30 µm in thickness, and detected by a high-speed one-dimensional detector (model number: D/teX Ultra 2). The sampling width, scanning speed, divergence slit width, light receiving slit width, and scattering slit width are set to respectively 0.01°, 5°/min, 0.625°, 13 mm (OPEN), and 8 mm.

[2] A solid electrolyte according to another aspect of the present invention contains a sulfur element, a nitrogen element, and a chlorine element, and has a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKα radiation, any of the different diffraction peaks being a maximum diffraction peak.

The solid electrolyte according to [2] enables an energy storage device to exhibit good charge-discharge performance when the solid electrolyte is used for a positive electrode or the like of the energy storage device. The reason therefor is not clear, but the following reason is presumed. A conventional sulfide solid electrolyte containing a nitrogen element is considered to have low oxidation resistance due to the nitrogen element contained, and when this conventional sulfide solid electrolyte is used for a positive electrode or the like of an energy storage device, the energy storage device does not exhibit sufficient charge-discharge performance. In contrast, the solid electrolyte according to [2] containing a chlorine element together with a nitrogen element, and having a prescribed crystal structure has higher oxidation resistance, presumably resulting in enabling an energy storage device to exhibit good charge-discharge performance when the solid electrolyte is used for a positive electrode or the like of the energy storage device.

[3] The solid electrolyte according to [1] or [2] further contains a phosphorus element, an element A, and an element M, the element A is at least one selected from the group consisting of a lithium element, a sodium element, and a potassium element, and the element M may be at least one selected from the group consisting of an aluminum element, a tantalum element, a silicon element, a scandium element, a magnesium element, a niobium element, a boron element, a hafnium element, a carbon element, a zirconium element, and a titanium element.

The solid electrolyte according to [3] enables an energy storage device to exhibit better charge-discharge performance when the solid electrolyte is used for a positive electrode or the like of the energy storage device.

[4] The solid electrolyte according to any one of [1] to [3] may be represented by the following formula (1).

AₐPS_{b}M_{c}N_{d}ClₑX_{f} ··· (1)

In the formula (1), A is at least one selected from the group consisting of Li, Na, and K. M is at least one selected from the group consisting of Al, Ta, Si, Sc, Mg, Nb, B, Hf, C, Zr, and Ti. X is at least one element other than A, P, S, M, N, and Cl. a, b, c, d, e, and f respectively satisfy 2 ≤ a ≤ 4, 2 ≤ b ≤ 5, 0 ≤ c ≤ 1, 0.01 ≤ d ≤ 2, 0.01 ≤ e ≤ 1, and 0 ≤ f ≤ 1.

The solid electrolyte according to [4] enables an energy storage device to exhibit better charge-discharge performance when the solid electrolyte is used for a positive electrode or the like of the energy storage device.

[5] In the solid electrolyte according to [4], in the formula (1), e may satisfy 0.01 ≤ e ≤ 0.5.

The solid electrolyte according to [5] enables an energy storage device to exhibit better charge-discharge performance when the solid electrolyte is used for a positive electrode or the like of the energy storage device.

[6] A solid electrolyte according to another aspect of the present invention is represented by the following formula (1), and has a crystal structure.

AₐPS_{b}M_{c}N_{d}ClₑX_{f} ··· (1)

In the formula (1), A is at least one selected from the group consisting of Li, Na, and K. M is at least one selected from the group consisting of Al, Ta, Si, Sc, Mg, Nb, B, Hf, C, Zr, and Ti. X is at least one element other than A, P, S, M, N, and Cl. a, b, c, d, e, and f respectively satisfy 2 ≤ a ≤ 4, 2 ≤ b ≤ 5, 0 ≤ c ≤ 1, 0.01 ≤ d ≤ 2, 0.01 ≤ e ≤ 1, and 0 ≤ f ≤ 1.

The solid electrolyte according to [6] enables an energy storage device to exhibit good charge-discharge performance when the solid electrolyte is used for a positive electrode or the like of the energy storage device. Although the reason therefor is not clear, the same reason as that of the solid electrolyte according to [2] described above is presumed.

[7] In the solid electrolyte according to [5], in the formula (1), e may satisfy 0.01 ≤ e ≤ 0.5.

The solid electrolyte according to [7] enables an energy storage device to exhibit better charge-discharge performance when the solid electrolyte is used for a positive electrode or the like of the energy storage device.

[8] A positive electrode, according to another aspect of the present invention, for an energy storage device contains the solid electrolyte according to any one of [1] to [7].

The positive electrode according to [8] enables an energy storage device to exhibit good charge-discharge performance when the positive electrode is used in the energy storage device.

[9] An energy storage device according to another aspect of the present invention contains the solid electrolyte according to any one of [1] to [7].

The energy storage device according to [9] can exhibit good charge-discharge performance.

[10] A solid electrolyte, according to another aspect of the present invention, for a positive electrode contains a sulfur element, a nitrogen element, and a chlorine element, and has at least one crystal structure between a crystal structure (hereinafter, also called a "crystal structure α") having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKα radiation, any of the different diffraction peaks being a maximum diffraction peak, and an argyrodite-type crystal structure (hereinafter, also called a "crystal structure β").

The solid electrolyte according to [10] has higher oxidation resistance. Although the reason therefor is not clear, it is presumed, for example, that the coexistence of the nitrogen element and the chlorine element form a good film on a surface of the solid electrolyte.

[11] The solid electrolyte according to [10] further contains a phosphorus element and an element A, and the element A may be at least one selected from the group consisting of a lithium element, a sodium element, and a potassium element.

The solid electrolyte according to [11] has still higher oxidation resistance.

[12] The solid electrolyte according to [10] or [11] further contains an element M, and the element M may be at least one selected from the group consisting of an aluminum element, a tantalum element, a silicon element, a scandium element, a magnesium element, a niobium element, a boron element, a hafnium element, a carbon element, a zirconium element, and a titanium element.

The solid electrolyte according to [12] has higher oxidation resistance and high ion conductivity.

[13] The solid electrolyte according to any one of [10] to [12] may be represented by the following formula (2).

AₐPS_{b}M_{c}N_{d}ClₑX_{f} ··· (2)

In the formula (2), A is at least one selected from the group consisting of Li, Na, and K. M is at least one selected from the group consisting of Al, Ta, Si, Sc, Mg, Nb, B, Hf, C, Zr, and Ti. X is at least one element other than A, P, S, M, N, and Cl. a, b, c, d, e, and f respectively satisfy 2 ≤ a ≤ 7, 2 ≤ b ≤ 6, 0 ≤ c ≤ 1, 0.01 ≤ d ≤ 2, 0.01 ≤ e ≤ 2, and 0 ≤ f ≤ 1.

The solid electrolyte according to [13] has still higher oxidation resistance.

[14] In the solid electrolyte according to [13], in the formula (2), e may satisfy 0.01 ≤ e ≤ 0.5.

The solid electrolyte according to [14] has still higher oxidation resistance.

[15] The solid electrolyte according to any one of [10] to [14] has the argyrodite-type crystal structure, and may have a diffraction peak in at least one of a 2θ range of 14.4° ± 0.5° or a 2θ range of 29.1° ± 0.5° in an X-ray diffraction diagram using CuKα radiation.

The solid electrolyte according to [15] has still higher oxidation resistance. The solid electrolyte according to [15] tends to have high ion conductivity when having a relatively small content of the nitrogen element.

[16] A solid electrolyte, according to another aspect of the present invention, for a positive electrode is represented by the following formula (2), and has a crystal structure.

AₐPS_{b}M_{c}N_{d}ClₑX_{f} ··· (2)

In the formula (2), A is at least one selected from the group consisting of Li, Na, and K. M is at least one selected from the group consisting of Al, Ta, Si, Sc, Mg, Nb, B, Hf, C, Zr, and Ti. X is at least one element other than A, P, S, M, N, and Cl. a, b, c, d, e, and f respectively satisfy 2 ≤ a ≤ 7, 2 ≤ b ≤ 6, 0 ≤ c ≤ 1, 0.01 ≤ d ≤ 2, 0.01 ≤ e ≤ 2, and 0 ≤ f ≤ 1.

The solid electrolyte according to [16] has higher oxidation resistance. Although the reason therefor is not clear, the same reason as that of the solid electrolyte according to [10] described above is presumed.

[17] In the solid electrolyte according to [16], in the formula (2), e may satisfy 0.01 ≤ e ≤ 0.5.

The solid electrolyte according to [17] has still higher oxidation resistance.

[18] A composite according to another aspect of the present invention is formed from a positive active material and the solid electrolyte according to any one of [10] to [17]

The composite according to [18] includes the solid electrolyte having higher oxidation resistance and therefore enables an energy storage device to exhibit good charge-discharge performance when the composite is used for a positive electrode of the energy storage device.

[19] The composite according to [18] may be composite particles including particles of the positive active material, the particles having at least a part of surfaces thereof coated with the solid electrolyte.

The composite according to [19] enables an energy storage device to exhibit better charge-discharge performance when the composite is used for a positive electrode of the energy storage device.

[20] A positive electrode, according to another aspect of the present invention, for an energy storage device contains the solid electrolyte according to any one of [10] to [17] or the composite according to [18] or [19].

The positive electrode according to [20] includes the solid electrolyte having higher oxidation resistance and therefore enables an energy storage device to exhibit good charge-discharge performance when the positive electrode is used in the energy storage device.

[21] An energy storage device according to another aspect of the present invention contains the solid electrolyte according to any one of [10] to [17] or the composite according to [18] or [19].

The energy storage device according to [21] includes the solid electrolyte having higher oxidation resistance and therefore can exhibit good charge-discharge performance.

Described in detail below are a solid electrolyte, a solid electrolyte for a positive electrode, a method for producing a solid electrolyte, a method for producing a solid electrolyte for a positive electrode, a composite, a positive electrode for an energy storage device, an energy storage device, a method for producing an energy storage device, and an energy storage apparatus, each according to one embodiment of the present invention, and those according to other embodiments. It is to be noted that the names of the constituent members (constituent elements) described in the embodiments are in some cases different from the names of the constituent members (constituent elements) described in BACKGROUND.

### <Solid electrolyte layer (A)>

A solid electrolyte (A) according to one embodiment of the present invention contains a sulfur element, a nitrogen element, and a chlorine element, and has a prescribed crystal structure. The solid electrolyte (A) may be a sulfide solid electrolyte. The solid electrolyte (A) enables an energy storage device to exhibit good charge-discharge performance when the solid electrolyte is used for a positive electrode or the like of the energy storage device.

### (Composition)

The solid electrolyte (A) contains a sulfur element, a nitrogen element, and a chlorine element.

The molar ratio [S/All] in content of the sulfur element to all the constituent elements of the solid electrolyte (A) is preferably 0.2 or more and 0.7 or less, more preferably 0.3 or more and 0.6 or less, still more preferably 0.4 or more and 0.5 or less. When the solid electrolyte (A) further contains a phosphorus element, the molar ratio [S/P] in content of the sulfur element to the phosphorus element is preferably 2 or more and 5 or less, more preferably 2.5 or more and 4.5 or less, still more preferably 3.0 or more and 4.0 or less, even more preferably 3.4 or more and 3.8 or less. By the molar ratio [S/All] or [S/P] being in the above range, the energy storage device can exhibit better charge-discharge performance.

By containing the nitrogen element, the solid electrolyte (A) can, for example, enhance the moisture resistance (atmospheric stability). The molar ratio [N/All] in content of the nitrogen element to all the constituent elements of the solid electrolyte (A) is preferably 0.01 or more and 0.2 or less, more preferably 0.02 or more and 0.1 or less, still more preferably 0.03 or more and 0.07 or less. When the solid electrolyte (A) further contains a phosphorus element, the molar ratio [N/P] in content of the nitrogen element to the phosphorus element is preferably 0.01 or more and 2 or less, more preferably 0.1 or more and 1 or less, still more preferably 0.2 or more and 0.7 or less, even more preferably 0.3 or more and 0.5 or less. By the molar ratio [N/All] or [N/P] being in the above range, the solid electrolyte (A) can, for example, further enhance the moisture resistance.

By containing the chlorine element in addition to the nitrogen element, the solid electrolyte (A) enables an energy storage device to exhibit good charge-discharge performance when the solid electrolyte is used for a positive electrode or the like of the energy storage device. An energy storage device including the solid electrolyte (A) can exert effects such as having high charge-discharge efficiency (ratio of discharge capacity to charge capacity), being less likely to cause a decrease of discharge capacity even in discharge at high current density, and having a high capacity retention ratio after a charge-discharge cycle. By containing the chlorine element in addition to the nitrogen element, the solid electrolyte (A) is presumed to improve the oxidation resistance. The molar ratio [Cl/All] in content of the chlorine element to all the constituent elements of the solid electrolyte (A) is preferably 0.005 or more and 0.1 or less, more preferably 0.01 or more and 0.06 or less, still more preferably 0.02 or more and 0.04 or less. The molar ratio [Cl/N] in content of the chlorine element to the nitrogen element in the solid electrolyte (A) is preferably 0.1 or more and 1.0 or less, more preferably 0.2 or more and 0.8 or less, still more preferably 0.3 or more and 0.7 or less, even more preferably 0.4 or more and 0.6 or less. When the solid electrolyte (A) further contains a phosphorus element, the molar ratio [Cl/P] in content of the chlorine element to the phosphorus element is preferably 0.01 or more and 1 or less, more preferably 0.05 or more and 0.8 or less, still more preferably 0.1 or more and 0.6 or less, still more preferably 0.15 or more and 0.5 or less, even more preferably 0.2 or more and 0.4 or less. By the molar ratio [Cl/All], [Cl/N], or [Cl/P] being in the above range, the energy storage device can exhibit better charge-discharge performance.

The solid electrolyte (A) preferably further contains a phosphorus element. By further containing the phosphorus element, the solid electrolyte (A), for example, has higher ion conductivity and thereby enables the energy storage device to exhibit better charge-discharge performance. The molar ratio [P/All] in content of the phosphorus element to all the constituent elements of the solid electrolyte (A) is preferably 0.05 or more and 0.3 or less, more preferably 0.07 or more and 0.2 or less, still more preferably 0.10 or more and 0.12 or less.

The solid electrolyte (A) further contains an element A, and the element A is preferably at least one selected from the group consisting of a lithium element, a sodium element, and a potassium element. By further containing the element A, the solid electrolyte (A), for example, has higher ion conductivity and thereby enables the energy storage device to exhibit better charge-discharge performance. The element A is particularly preferably a lithium element.

The molar ratio [A/All] in content of the element A to all the constituent elements of the solid electrolyte (A) is preferably 0.2 or more and 0.5 or less, more preferably 0.3 or more and 0.4 or less, still more preferably 0.33 or more and 0.38 or less. When the solid electrolyte (A) contains a phosphorus element, the molar ratio [A/P] in content of the element A to the phosphorus element is preferably 2 or more and 4 or less, more preferably 2.5 or more and 3.8 or less, still more preferably 2.8 or more and 3.6 or less, even more preferably 3.0 or more and 3.4 or less. By the molar ratio [A/All] or [A/P] being in the above range, the energy storage device can exhibit better charge-discharge performance.

The solid electrolyte (A) further contains an element M, and the element M is preferably at least one selected from the group consisting of an aluminum element, a tantalum element, a silicon element, a scandium element, a magnesium element, a niobium element, a boron element, a hafnium element, a carbon element, a zirconium element, and a titanium element. By further containing the element M, the solid electrolyte (A), for example, has higher thermal stability, suppresses the discharge of the nitrogen element to the outside of the system in a process of producing the solid electrolyte (A), allowing the nitrogen element to sufficiently exhibit the effect thereof, and thereby enables the energy storage device to exhibit better charge-discharge performance. Although the reason why the element M suppresses the discharge of the nitrogen element to the outside of the system is not clear, the following reason is presumed. In a method for producing a solid electrolyte with use of Li₃N as a raw material compound for making the solid electrolyte contain a nitrogen element, a nitrogen gas is easily generated due to the nitrogen defect generation energy being low in Li₃N. In contrast, when a raw material compound containing the nitrogen element and the element M is used, a nitrogen defect is less likely to be generated in a synthesis process due to the nitrogen defect generation energy being high in the raw material compound, and a nitrogen gas is thus less likely to be generated. Therefore, it is possible to suppress the discharge of the nitrogen element to the outside of the system in the production process. This nitrogen defect generation energy can be determined by a known method using the first-principles calculation. Table 1 shows the results of calculating, using the first-principles calculation, the nitrogen defect generation energy (E_{Ndefect}) in the use of the raw material compounds (compositions).

**[Table 1]**

| System | Composition | Defect element | E_{Ndefect} / eV |
|---|---|---|---|
| - | Li₃N | N | 2.94 |
| B | Li_{3/2}B_{1/2}N | N | 4.35 |
| C | LiC_{1/2}N | N | 4.12 |
| Mg | LiMgN | N | 4.38 |
| Al | Li_{3/2}Al_{1/2}N | N | 5.36 |
| Si | Li_{5/3}Si_{1/3}N | N | 4.48 |
| P | Li_{7/4}P_{1/4}N | N | 4.11 |
| Ca | LiCaN | N | 3.28 |
| Sc | Li_{3/2}Sc_{1/2}N | N | 4.48 |
| Ti | Li_{5/3}Ti_{1/3}N | N | 4.00 |
| V | Li_{7/4}V_{1/4}N | N | 3.88 |
| Cr | Li_{3/2}Cr_{1/4}N | N | 2.32 |
| Mn | Li_{7/4}Mn_{1/4}N | N | 2.23 |
| Fe | Li_{3/2}Fe_{1/2}N | N | -4.45 |
| Co | Li_{3/2}Co_{1/2}N | N | 1.17 |
| Ni | Li_{5/3}NiN | N | -4.05 |
| Zn | LiZnN | N | 2.86 |
| Ga | Li_{3/2}Ga_{1/2}N | N | 3.35 |
| Ge | Li_{5/3}Ge_{1/3}N | N | 2.72 |
| Sr | LiSrN | N | 2.16 |
| Y | Li_{3/2}Y_{1/2}N | N | 3.75 |
| Zr | LiZr_{1/2}N | N | 4.07 |
| Nb | Li_{7/4}Nb_{1/4}N | N | 4.37 |
| In | Li_{3/2}In_{1/2}N | N | 1.64 |
| Sn | LiSn_{1/2}N | N | 3.00 |
| Ce | LiCe_{1/2}N | N | 3.12 |
| Hf | LiHf_{1/2}N | N | 4.33 |
| Ta | Li_{7/4}Ta_{1/4}N | N | 4.69 |

Table 1 clarifies that the nitrogen defect generation energy E_{Ndefect} is as high as 4.00 eV or more when the raw material compounds containing the element M (an aluminum element, a tantalum element, a silicon element, a scandium element, a magnesium element, a niobium element, a boron element, a hafnium element, a carbon element, a zirconium element, or a titanium element) are used. Accordingly, the use of the raw material compounds containing these elements M makes it less likely for a nitrogen defect to be generated, and it is thus anticipated that the effect of suppressing the discharge of the nitrogen element to the outside of the system in a process of producing a solid electrolyte is highly possibly exhibited. The element M is particularly preferably an aluminum element to get the effect to be more sufficiently exhibited.

In addition, by containing the element M, the solid electrolyte (A) sometimes has higher ion conductivity. On the other hand, when having a small content of the element M or containing no element M, the solid electrolyte (A) sometimes has higher oxidation resistance.

The molar ratio [M/All] in content of the element M to all the constituent elements of the solid electrolyte (A) is preferably 0.005 or more and 0.1 or less, more preferably 0.01 or more and 0.06 or less, still more preferably 0.02 or more and 0.04 or less. When the solid electrolyte (A) contains a phosphorus element, the molar ratio [M/P] in content of the element M to the phosphorus element is preferably 0.01 or more and 1 or less, more preferably 0.05 or more and 0.8 or less, still more preferably 0.1 or more and 0.5 or less, even more preferably 0.15 or more and 0.3 or less. By the molar ratio [M/All] or [M/P] being in the above range, the energy storage device can exhibit better charge-discharge performance.

The solid electrolyte (A) may further contain another element X other than the sulfur element, the nitrogen element, the chlorine element, the phosphorus element, and the elements A and M. The element X may be a single element, or two or more elements. However, the molar ratio [X/All] in content of the element X to all the constituent elements of the solid electrolyte (A) is preferably 0.1 or less, more preferably 0.01 or less, still more preferably 0.001 or less. The lower limit of the molar ratio [X/All] may be 0 or 0.00001. The molar ratio [X/All] may be 0. When the solid electrolyte (A) contains a phosphorus element, the molar ratio [X/P] of the total content of the element(s) (X) to the content of the phosphorus element is preferably 1 or less, more preferably 0.1 or less, 0.05 or less, or 0.01 or less. The lower limit of the molar ratio [X/P] may be 0 or 0.001. The molar ratio [X/P] may be 0. The solid electrolyte (A) thus containing no element X or having a sufficiently small content of the element X, for example, enables the essential elements to effectively function and thereby the energy storage device to exhibit better charge-discharge performance.

The solid electrolyte (A) is preferably represented by the following formula (1).

AₐPS_{b}M_{c}N_{d}ClₑX_{f} ··· (1)

In the formula (1), A is at least one selected from the group consisting of Li, Na, and K. M is at least one selected from the group consisting of Al, Ta, Si, Sc, Mg, Nb, B, Hf, C, Zr, and Ti. X is at least one element other than A, P, S, M, N, and Cl. a, b, c, d, e, and f respectively satisfy 2 ≤ a ≤ 4, 2 ≤ b ≤ 5, 0 ≤ c ≤ 1, 0.01 ≤ d ≤ 2, 0.01 ≤ e ≤ 1, and 0 ≤ f ≤ 1.

The solid electrolyte (A) having the composition represented by the formula (1) enables the energy storage device to exhibit better charge-discharge performance. In the formula (1), A is preferably Li. M is preferably Al. The suitable range of a, b, c, d, e, and f is the same as the suitable range of the molar ratio in content of each of the elements to the phosphorus element described above. That is, the suitable range of a is the same as the suitable range of [A/P] described above, the suitable range of b is the same as the suitable range of [S/P] described above, the suitable range of c is the same as the suitable range of [M/P] described above, the suitable range of d is the same as the suitable range of [N/P] described above, the suitable range of e is the same as the suitable range of [Cl/P] described above, and the suitable range of f is the same as the suitable range of [X/P] described above.

### (Crystal structure, etc.)

The solid electrolyte (A) has a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKα radiation, any of the different diffraction peaks being a maximum diffraction peak. That is, in a X-ray diffraction diagram using CuKα radiation, a first diffraction peak appears in a 2θ range of 17.9° ± 0.5° or 19.1° ± 0.5°, a second diffraction peak appears in a 2θ range of 29.1° ± 0.5°, and a third diffraction peak appears in a 2θ range of 29.8° ± 0.5°, any of the first, second, and third diffraction peaks being a maximum diffraction peak. The maximum diffraction peak may appear in the 2θ range of 17.9° ± 0.5° or 19.1° ± 0.5°. A diffraction peak may appear in each of the 2θ range of 17.9° ± 0.5° and the 2θ range of 19.1° ± 0.5°. That is, total four diffraction peaks may appear respectively in the 2θ range of 17.9° ± 0.5°, the 2θ range of 19.1° ± 0.5°, the 2θ range of 29.1° ± 0.5°, and the 2θ range of 29.8° ± 0.5°. Another diffraction peak may appear in a range other than the four ranges. By having this crystal structure, the solid electrolyte (A) enables an energy storage device to exhibit good charge-discharge performance when the solid electrolyte is used for a positive electrode or the like of the energy storage device. The "maximum diffraction peak" means a diffraction peak having the highest diffraction intensity among all the diffraction peaks in the X-ray diffraction diagram using CuKα radiation.

The solid electrolyte (A) may have in a part thereof a crystal structure other than the crystal structure having the diffraction peaks described above. The solid electrolyte (A) may include an amorphous portion.

The lower limit of the ion conductivity at 25°C of the solid electrolyte (A) is preferably 0.1 mS/cm, more preferably 1 mS/cm, more preferably 1.5 mS/cm, more preferably 2 mS/cm, more preferably 2.5 mS/cm, more preferably 3 mS/cm, more preferably 3.5 mS/cm, more preferably 4 mS/cm, more preferably 4.5 mS/cm, more preferably 5 mS/cm. By having an ion conductivity at 25°C of greater than or equal to the above lower limit, the solid electrolyte (A) can enhance the charge-discharge performance of the energy storage device. The upper limit of the ion conductivity may be, for example, 30 mS/cm, 20 mS/cm, 10 mS/cm, or 5 mS/cm. The ion conductivity may be greater than or equal to any of the above lower limits and lower than or equal to any of the above upper limits (the lower limit is to be a smaller value than the value of the upper limit).

The ion conductivity of the solid electrolyte (A) is determined by measuring the alternating-current impedance by the following method. Under an argon atmosphere with a dew point of -50°C or lower, 120 mg of a sample powder are put into a powder molder of 10 mm in inner diameter, and then subjected to uniaxial pressure molding at 50 MPa or less, using a hydraulic press. After releasing the pressure, the sample has put onto an upper surface thereof 120 mg of a SUS316L powder as a current collector, and is then subjected again to uniaxial pressure molding at 50 MPa or less, using a hydraulic press. Next, the sample has put onto a lower surface thereof 120 mg of a SUS316L powder as a current collector, and is then subjected to uniaxial pressure molding at 360 MPa for 5 minutes to obtain a pellet for measurement of ion conductivity. This pellet for measurement of ion conductivity is inserted into an HS cell manufactured by Hohsen Corp., and measured for alternating-current impedance under a prescribed temperature. The measurement conditions are an applied voltage amplitude of 20 mV, a frequency range of 1 MHz to 100 mHz, and a measurement temperature of 25°C.

The shape of the solid electrolyte (A) is not particularly limited, and is typically granular, massive, or the like. The solid electrolyte (A) can suitably be used as a nonaqueous electrolyte of an energy storage device, such as a lithium ion secondary battery, particularly a lithium ion energy storage device. Especially, the solid electrolyte (A) can particularly suitably be used as a nonaqueous electrolyte of an all-solid-state battery. The solid electrolyte (A) can be used for any of a positive electrode, an isolation layer, a negative electrode, and the like of an energy storage device. Especially, the solid electrolyte (A) can suitably be used for a positive electrode of an energy storage device in view of the advantage of having excellent oxidation resistance.

### <Solid electrolyte (B)>

A solid electrolyte (B) according to one embodiment of the present invention is represented by the following formula (1), and has a crystal structure.

AₐPS_{b}M_{c}N_{d}ClₑX_{f} ··· (1)

In the formula (1), A is at least one selected from the group consisting of Li, Na, and K. M is at least one selected from the group consisting of Al, Ta, Si, Sc, Mg, Nb, B, Hf, C, Zr, and Ti. X is at least one element other than A, P, S, M, N, and Cl. a, b, c, d, e, and f respectively satisfy 2 ≤ a ≤ 4, 2 ≤ b ≤ 5, 0 ≤ c ≤ 1, 0.01 ≤ d ≤ 2, 0.01 ≤ e ≤ 1, and 0 ≤ f ≤ 1.

The solid electrolyte (B) enables an energy storage device to exhibit good charge-discharge performance when the solid electrolyte is used for a positive electrode or the like of the energy storage device. The solid electrolyte (B) is the same as the solid electrolyte (A) except that the composition is represented by the formula (1) and the crystal structure is not specifically limited. The solid electrolyte (B) preferably has a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKα radiation, any of the different diffraction peaks being a maximum diffraction peak. Specific forms and suitable forms of the solid electrolyte (B) are the same as the specific forms and the suitable forms of the solid electrolyte (A).

### <Solid electrolyte (C) for positive electrode>

A solid electrolyte (C), according to one embodiment of the present invention, for a positive electrode (hereinafter, also called a "solid electrolyte (C)") contains a sulfur element, a nitrogen element, and a chlorine element, and has a prescribed crystal structure. The solid electrolyte (C) may be a sulfide solid electrolyte. The solid electrolyte (C) has higher oxidation resistance and therefore enables an energy storage device to exhibit good charge-discharge performance when the solid electrolyte is used for a positive electrode of the energy storage device.

### (Composition)

The solid electrolyte (C) contains a sulfur element, a nitrogen element, and a chlorine element.

The lower limit of the molar ratio [S/All] in content of the sulfur element to all the constituent elements of the solid electrolyte (C) is preferably 0.1, more preferably 0.2, still more preferably 0.3, and may be 0.4. The upper limit of the molar ratio [S/All] is preferably 0.7, more preferably 0.6, still more preferably 0.5, and may be 0.4. The molar ratio [S/All] may be greater than or equal to any of the above lower limits and lower than or equal to any of the above upper limits (the lower limit is to be a smaller value than the value of the upper limit). When the solid electrolyte (C) further contains a phosphorus element, the lower limit of the molar ratio [S/P] in content of the sulfur element to the phosphorus element is preferably 2, more preferably 2.5, still more preferably 3.0, and may be 3.4, 3.5, 4.0, or 4.5. The upper limit of the molar ratio [S/P] is preferably 6, more preferably 5, and may be 4.5, 4.0, or 3.8. The molar ratio [S/P] may be greater than or equal to any of the above lower limits and lower than or equal to any of the above upper limits (the lower limit is to be a smaller value than the value of the upper limit). By the molar ratio [S/All] or [S/P] being in the above range, the energy storage device can exhibit better charge-discharge performance.

By containing the nitrogen element, the solid electrolyte (C) can, for example, enhance the moisture resistance (atmospheric stability). By containing the nitrogen element and the chlorine element, the solid electrolyte (C) can enhance the oxidation resistance. The lower limit of the molar ratio [N/All] in content of the nitrogen element to all the constituent elements of the solid electrolyte (C) is preferably 0.005, and may be 0.01, 0.02, or 0.03. The upper limit of the molar ratio [N/All] is preferably 0.2, more preferably 0.1, still more preferably 0.07, and may be 0.05, 0.03, 0.02, or 0.01. The molar ratio [N/All] may be greater than or equal to any of the above lower limits and lower than or equal to any of the above upper limits (the lower limit is to be a smaller value than the value of the upper limit). When the solid electrolyte (C) further contains a phosphorus element, the lower limit of the molar ratio [N/P] in content of the nitrogen element to the phosphorus element is preferably 0.01, more preferably 0.1, and may be 0.2, 0.3, or 0.4. The upper limit of the molar ratio [N/P] is preferably 2, more preferably 1, still more preferably 0.7, even more preferably 0.5, and may be 0.4, 0.3, or 0.2. The molar ratio [N/P] may be greater than or equal to any of the above lower limits and lower than or equal to any of the above upper limits (the lower limit is to be a smaller value than the value of the upper limit). By the molar ratio [N/All] or [N/P] being in the above range, the solid electrolyte (C) can, for example, further enhance the moisture resistance, the oxidation resistance, and the like.

By containing the chlorine element together with the nitrogen element, the solid electrolyte (C) has higher oxidation resistance. An energy storage device including the solid electrolyte (C) can exert effects such as having high charge-discharge efficiency (ratio of discharge capacity to charge capacity), being less likely to cause a decrease of discharge capacity even in discharge at high current density, and having a high capacity retention ratio after a charge-discharge cycle. The lower limit of the molar ratio [Cl/All] in content of the chlorine element to all the constituent elements of the solid electrolyte (C) is preferably 0.005, more preferably 0.01, still more preferably 0.02, and may be 0.03 or 0.05. The upper limit of the molar ratio [Cl/All] is preferably 0.1, more preferably 0.08, and may be 0.06 or 0.04. The molar ratio [Cl/All] may be greater than or equal to any of the above lower limits and lower than or equal to any of the above upper limits (the lower limit is to be a smaller value than the value of the upper limit). The lower limit of the molar ratio [Cl/N] in content of the chlorine element to the nitrogen element in the solid electrolyte (C) is preferably 0.1, more preferably 0.2, still more preferably 0.3, even more preferably 0.4, and may be 0.5, 1, 3, or 5. The upper limit of the molar ratio [Cl/N] is preferably 100, more preferably 50, and may be 25, 10, 5, 3, 2, 1.0, 0.8, 0.7, or 0.6. The molar ratio [Cl/N] may be greater than or equal to any of the above lower limits and lower than or equal to any of the above upper limits (the lower limit is to be a smaller value than the value of the upper limit). When the solid electrolyte (C) further contains a phosphorus element, the lower limit of the molar ratio [Cl/P] in content of the chlorine element to the phosphorus element is preferably 0.01, more preferably 0.05, still more preferably 0.1, still more preferably 0.15, even more preferably 0.2, and may be 0.5. The upper limit of the molar ratio [Cl/P] is preferably 2, more preferably 1.8, and may be 1.6, 1.4, 1.2, 1.0, 0.8, 0.6, 0.5, or 0.4. The molar ratio [Cl/P] may be greater than or equal to any of the above lower limits and lower than or equal to any of the above upper limits (the lower limit is to be a smaller value than the value of the upper limit). By the molar ratio [Cl/All], [Cl/N], or [Cl/P] being in the above range, the solid electrolyte (C) has still higher oxidation resistance.

The solid electrolyte (C) preferably further contains a phosphorus element. By further containing the phosphorus element, the solid electrolyte (C), for example, has higher ion conductivity and thereby enables the energy storage device to exhibit better charge-discharge performance. The lower limit of the molar ratio [P/All] in content of the phosphorus element to all the constituent elements of the solid electrolyte (C) is preferably 0.05, more preferably 0.07, and may be 0.10. The upper limit of the molar ratio [P/All] is preferably 0.3, more preferably 0.2, still more preferably 0.12, and may be 0.09. The molar ratio [P/All] may be greater than or equal to any of the above lower limits and lower than or equal to any of the above upper limits (the lower limit is to be a smaller value than the value of the upper limit).

The solid electrolyte (C) further contains an element A, and the element A is preferably at least one selected from the group consisting of a lithium element, a sodium element, and a potassium element. By further containing the element A, the solid electrolyte (C), for example, has higher ion conductivity and thereby enables the energy storage device to exhibit better charge-discharge performance. The element A is particularly preferably a lithium element.

The lower limit of the molar ratio [A/All] in content of the element A to all the constituent elements of the solid electrolyte (C) is preferably 0.2, more preferably 0.3, still more preferably 0.33, and may be 0.4 or 0.45. The upper limit of the molar ratio [A/All] is preferably 0.6, more preferably 0.5, and may be 0.4 or 0.38. The molar ratio [A/All] may be greater than or equal to any of the above lower limits and lower than or equal to any of the above upper limits (the lower limit is to be a smaller value than the value of the upper limit). When the solid electrolyte (C) contains a phosphorus element, the lower limit of the molar ratio [A/P] in content of the element A to the phosphorus element is preferably 2, more preferably 2.5, still more preferably 2.8, even more preferably 3.0, and may be 4.0, 5.0, or 6.0. The upper limit of the molar ratio [A/P] is preferably 7, and may be 6.0, 5.0, 4.0, 3.8, 3.6, or 3.4. The molar ratio [A/P] may be greater than or equal to any of the above lower limits and lower than or equal to any of the above upper limits (the lower limit is to be a smaller value than the value of the upper limit). By the molar ratio [A/All] or [A/P] being in the above range, the energy storage device can exhibit better charge-discharge performance.

The solid electrolyte (C) further contains an element M, and the element M is preferably at least one selected from the group consisting of an aluminum element, a tantalum element, a silicon element, a scandium element, a magnesium element, a niobium element, a boron element, a hafnium element, a carbon element, a zirconium element, and a titanium element. By further containing the element M, the solid electrolyte (C), for example, has higher thermal stability, suppresses the discharge of the nitrogen element to the outside of the system in a process of producing the solid electrolyte (C), allowing the nitrogen element to sufficiently exhibit the effect thereof, and thereby enables the energy storage device to exhibit better charge-discharge performance. Although the reason why the element M suppresses the discharge of the nitrogen element to the outside of the system is not clear, the same reason as that of the solid electrolyte (A) described above is presumed.

Table 1 clarifies that the nitrogen defect generation energy E_{Ndefect} is as high as 4.00 eV or more when the raw material compounds containing the element M (an aluminum element, a tantalum element, a silicon element, a scandium element, a magnesium element, a niobium element, a boron element, a hafnium element, a carbon element, a zirconium element, or a titanium element) are used. Accordingly, the use of the raw material compounds containing these elements M makes it less likely for a nitrogen defect to be generated, and it is thus anticipated that the effect of suppressing the discharge of the nitrogen element to the outside of the system in a process of producing a solid electrolyte is highly possibly exhibited. The element M is particularly preferably an aluminum element to get the effect to be more sufficiently exhibited.

In addition, by containing the element M, the solid electrolyte (C) sometimes has higher ion conductivity. On the other hand, when having a small content of the element M or containing no element M, the solid electrolyte (C) sometimes has higher oxidation resistance.

The lower limit of the molar ratio [M/All] in content of the element M to all the constituent elements of the solid electrolyte (C) may be 0, and is preferably 0.005, more preferably 0.01, still more preferably 0.02. The upper limit of the molar ratio [M/All] is preferably 0.1, more preferably 0.06, still more preferably 0.04. The molar ratio [M/All] may be greater than or equal to any of the above lower limits and lower than or equal to any of the above upper limits. When the solid electrolyte (C) contains a phosphorus element, the lower limit of the molar ratio [M/P] in content of the element M to the phosphorus element may be 0, and is preferably 0.01, more preferably 0.05, still more preferably 0.1, even more preferably 0.15. The upper limit of the molar ratio [M/P] is preferably 1, more preferably 0.8, still more preferably 0.5, even more preferably 0.3. The molar ratio [M/P] may be greater than or equal to any of the above lower limits and lower than or equal to any of the above upper limits. By the molar ratio [M/All] or [M/P] being in the above range, the energy storage device can exhibit better charge-discharge performance.

The solid electrolyte (C) may further contain another element X other than the sulfur element, the nitrogen element, the chlorine element, the phosphorus element, and the elements A and M. The element X may be a single element, or two or more elements. However, the upper limit of the molar ratio [X/All] in content of the element X to all the constituent elements of the solid electrolyte (C) is preferably 0.1, more preferably 0.01, still more preferably 0.001. The lower limit of the molar ratio [X/All] may be 0 or 0.00001. The molar ratio [X/All] may be greater than or equal to any of the above lower limits and lower than or equal to any of the above upper limits. The molar ratio [X/All] may be 0. When the solid electrolyte (C) contains a phosphorus element, the upper limit of the molar ratio [X/P] of the total content of the element(s) (X) to the content of the phosphorus element is preferably 1, more preferably 0.1, 0.05, or 0.01. The lower limit of the molar ratio [X/P] may be 0 or 0.001. The molar ratio [X/P] may be greater than or equal to any of the above lower limits and lower than or equal to any of the above upper limits. The molar ratio [X/P] may be 0. The solid electrolyte (C) thus containing no element X or having a sufficiently small content of the element X, for example, enables the essential elements to effectively function, thereby having still higher oxidation resistance, and enables the energy storage device to exhibit better charge-discharge performance.

The solid electrolyte (C) is preferably represented by the following formula (2).

AₐPS_{b}M_{c}N_{d}ClₑX_{f} ··· (2)

In the formula (2), A is at least one selected from the group consisting of Li, Na, and K. M is at least one selected from the group consisting of Al, Ta, Si, Sc, Mg, Nb, B, Hf, C, Zr, and Ti. X is at least one element other than A, P, S, M, N, and Cl. a, b, c, d, e, and f respectively satisfy 2 ≤ a ≤ 7, 2 ≤ b ≤ 6, 0 ≤ c ≤ 1, 0.01 ≤ d ≤ 2, 0.01 ≤ e ≤ 2, and 0 ≤ f ≤ 1.

The solid electrolyte (C) having the composition represented by the formula (2) has still higher oxidation resistance and enables the energy storage device to exhibit better charge-discharge performance. In the formula (2), A is preferably Li. M is preferably Al. The suitable range of a, b, c, d, e, and f is the same as the suitable range of the molar ratio in content of each of the elements to the phosphorus element described above. That is, the suitable range of a is the same as the suitable range of [A/P] described above, the suitable range of b is the same as the suitable range of [S/P] described above, the suitable range of c is the same as the suitable range of [M/P] described above, the suitable range of d is the same as the suitable range of [N/P] described above, the suitable range of e is the same as the suitable range of [Cl/P] described above, and the suitable range of f is the same as the suitable range of [X/P] described above.

### (Crystal structure, etc.)

The solid electrolyte (C) has at least one crystal structure between a crystal structure α and a crystal structure β.

The crystal structure α is a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKα radiation, any of the different diffraction peaks being a maximum diffraction peak. That is, when the solid electrolyte (C) has the crystal structure α, a first diffraction peak appears in a 2θ range of 17.9° ± 0.5° or 19.1° ± 0.5°, a second diffraction peak appears in a 2θ range of 29.1° ± 0.5°, and a third diffraction peak appears in a 2θ range of 29.8° ± 0.5° in a X-ray diffraction diagram using CuKα radiation, any of the first, second, and third diffraction peaks being a maximum diffraction peak. The maximum diffraction peak may appear in the 2θ range of 17.9° ± 0.5° or 19.1° ± 0.5°. A diffraction peak may appear in each of the 2θ range of 17.9° ± 0.5° and the 2θ range of 19.1° ± 0.5°. That is, total four diffraction peaks may appear respectively in the 2θ range of 17.9° ± 0.5°, the 2θ range of 19.1° ± 0.5°, the 2θ range of 29.1° ± 0.5°, and the 2θ range of 29.8° ± 0.5°. Another diffraction peak may appear in a range other than the four ranges. The "maximum diffraction peak" means a diffraction peak having the highest diffraction intensity among all the diffraction peaks in the X-ray diffraction diagram using CuKα radiation.

The crystal structure β is an argyrodite-type crystal structure. The argyrodite-type crystal structure typically has diffraction peaks respectively in 2θ ranges of 15.6° ± 0.5°, 18.0° ± 0.5°, 25.5° ± 0.5°, 30.0° ± 0.5°, and 31.4° ± 0.5° in an X-ray diffraction diagram using CuKα radiation. When having the crystal structure β, the solid electrolyte (C) may have a diffraction peak in at least one of a 2θ range of 14.4° ± 0.5° or a 2θ range of 29.1° ± 0.5° in an X-ray diffraction diagram using CuKα radiation. In this case, the solid electrolyte (C) may have a diffraction peak in both the 2θ range of 14.4° ± 0.5° and the 2θ range of 29.1° ± 0.5° in an X-ray diffraction diagram using CuKα radiation. The solid electrolyte (C) having the crystal structure β tends to have high ion conductivity when having a relatively small content of the nitrogen element.

By having this crystal structure (at least one of the crystal structure α or β), the solid electrolyte (C) exerts the effect of improving the oxidation resistance brought about by containing the sulfur element, the nitrogen element, and the chlorine element.

The solid electrolyte (C) may have in a part thereof a crystal structure other than the crystal structures α and β. The solid electrolyte (C) may include an amorphous portion.

The lower limit of the ion conductivity at 25°C of the solid electrolyte (C) is preferably 0.1 mS/cm, more preferably 0.5 mS/cm, still more preferably 1 mS/cm. By having an ion conductivity at 25°C of greater than or equal to the above lower limit, the solid electrolyte (C) can enhance the charge-discharge performance of the energy storage device. The upper limit of the ion conductivity may be, for example, 20 mS/cm or 10 mS/cm. The ion conductivity may be greater than or equal to any of the above lower limits and lower than or equal to any of the above upper limits.

The ion conductivity of the solid electrolyte (C) is determined by measuring the alternating-current impedance by the following method. Under an argon atmosphere with a dew point of -50°C or lower, 120 mg of a sample powder are put into a powder molder of 10 mm in inner diameter, and then subjected to uniaxial pressure molding at 50 MPa or less, using a hydraulic press. After releasing the pressure, the sample has put onto an upper surface thereof 120 mg of a SUS316L powder as a current collector, and is then subjected again to uniaxial pressure molding at 50 MPa or less, using a hydraulic press. Next, the sample has put onto a lower surface thereof 120 mg of a SUS316L powder as a current collector, and is then subjected to uniaxial pressure molding at 360 MPa for 5 minutes to obtain a pellet for measurement of ion conductivity. This pellet for measurement of ion conductivity is inserted into an HS cell manufactured by Hohsen Corp., and measured for alternating-current impedance under a prescribed temperature. The measurement conditions are an applied voltage amplitude of 20 mV, a frequency range of 1 MHz to 100 mHz, and a measurement temperature of 25°C.

The solid electrolyte (C) is used as a material constituting a positive electrode of an energy storage device. The shape of the solid electrolyte (C) is not particularly limited, and is typically granular, massive, or the like. The solid electrolyte (C) can suitably be used as a nonaqueous electrolyte of an energy storage device, such as a lithium ion secondary battery, particularly a lithium ion energy storage device. Especially, the solid electrolyte (C) can particularly suitably be used as a nonaqueous electrolyte of an all-solid-state battery.

### <Solid electrolyte (D) for positive electrode>

A solid electrolyte (D), according to one embodiment of the present invention, for a positive electrode (hereinafter, also called a "solid electrolyte (D)") is represented by the following formula (2), and has a crystal structure.

AₐPS_{b}M_{c}N_{d}ClₑX_{f} ··· (2)

In the formula (2), A is at least one selected from the group consisting of Li, Na, and K. M is at least one selected from the group consisting of Al, Ta, Si, Sc, Mg, Nb, B, Hf, C, Zr, and Ti. X is at least one element other than A, P, S, M, N, and Cl. a, b, c, d, e, and f respectively satisfy 2 ≤ a ≤ 7, 2 ≤ b ≤ 6, 0 ≤ c ≤ 1, 0.01 ≤ d ≤ 2, 0.01 ≤ e ≤ 2, and 0 ≤ f ≤ 1.

The solid electrolyte (D) has high oxidation resistance and enables an energy storage device to exhibit good charge-discharge performance when the solid electrolyte is used for a positive electrode of the energy storage device. The solid electrolyte (D) is the same as the solid electrolyte (C) except that the composition is represented by the formula (2) and the crystal structure is not specifically limited. The solid electrolyte (D) preferably has at least one crystal structure between the crystal structures α and β described above. Specific forms and suitable forms of the solid electrolyte (D) are the same as the specific forms and the suitable forms of the solid electrolyte (C).

### <Solid electrolyte layer (X)>

A solid electrolyte (X) according to one embodiment of the present invention contains a sulfur element, a nitrogen element, and a chlorine element, and has at least one crystal structure between a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKα radiation, any of the different diffraction peaks being a maximum diffraction peak, and an argyrodite-type crystal structure. The solid electrolyte (X) may be a sulfide solid electrolyte. The solid electrolyte (X) enables an energy storage device to exhibit good charge-discharge performance when the solid electrolyte is used for a positive electrode or the like of the energy storage device.

The solid electrolyte (X) enables an energy storage device to exhibit good charge-discharge performance when the solid electrolyte is used for a positive electrode or the like of the energy storage device. The solid electrolyte (X) is the same as the solid electrolyte (A) except for having at least one crystal structure between a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKα radiation, any of the different diffraction peaks being a maximum diffraction peak, and an argyrodite-type crystal structure. The solid electrolyte (X) is the same as the solid electrolyte (C) except that the purpose of use of the solid electrolyte (X) is not limited to the use for a positive electrode Specific forms and suitable forms of the solid electrolyte (X) are the same as the specific forms and the suitable forms of the solid electrolyte (A) and/or (C).

### <Method for producing solid electrolyte/solid electrolyte for positive electrode>

A method, according to one embodiment of the present invention, for producing a solid electrolyte (the solid electrolytes (X), (A), and (B)), and a method, according to one embodiment of the present invention, for producing a solid electrolyte (the solid electrolytes (C) and (D)) for a positive electrode are not particularly limited, but the solid electrolyte can suitably produced by treating a composition containing a sulfur element, a nitrogen element, and a chlorine element.

### (Composition)

A composition used as a raw material in the production methods contains a sulfur element, a nitrogen element, and a chlorine element, and, in addition, preferably further contains a phosphorus element and an element A, and more preferably further contains an element M. The composition is, for example, a mixture of two or more compounds or simple substances (hereinafter, also called "compounds or the like") of the sulfur element, the nitrogen element, the chlorine element, the phosphorus element, and the elements A and M, each of the compounds containing at least one element of those elements. In this case, the composition (mixture) is acceptable as long as any of the compounds or the like contained therein contains the sulfur element, the nitrogen element, the chlorine element, the phosphorus element, and the element A and M. One compound may contain therein two or more elements among the sulfur element, the nitrogen element, the chlorine element, the phosphorus element, and the elements A and M. Examples of a compound containing a lithium element as the element A and the sulfur element include Li₂S described later, and examples of a compound containing the phosphorus element and the sulfur element include P₂S₅ described later. The composition may contain a compound or the like not containing any of the sulfur element, the nitrogen element, the chlorine element, the phosphorus element, and the elements A and M.

Examples of a compound or the like containing the sulfur element include Li₂S, P₂S₃, P₂S₅, Al₂S₃, MgS, SiS₂, and elemental sulfur. Among these examples, Li₂S, P₂S₃, and P₂S₅ are preferable, and Li₂S and P₂S₅ are more preferable. One of the compounds or the like containing the sulfur element may be used alone, or two or more thereof may be used in mixture.

Examples of a compound containing the nitrogen element include compounds represented by Li₃N, PN, P₃N₅, S₄N₄, S₂N₂, S₄N₂, and A_{α}M_{β}N (A is the element A, M is the element M, and α and β are numerical values giving a stoichiometric proportion according to the type of the element M). Compounds represented by Li₃N and A_{α}M_{β}N are preferable. Examples of the compound represented by A_{α}M_{β}N include a compound containing the lithium element, the nitrogen element, and the element M (hereinafter, also described as a Li-M-N-containing compound). The Li-M-N-containing compound can be produced by the following procedure. First, Li₃N and a nitride of the element M are prepared, and mixed in a mortar or the like. Next, pellets of the raw material compounds mixed are produced. Next, the pellets are heat-treated to produce a Li-M-N-containing compound. It is to be noted that the means for preparing the Li-M-N-containing compound is not limited to this procedure, and the Li-M-N-containing compound may be prepared by another method. For example, the raw materials for the Li-M-N-containing compound are acceptable as long as the raw materials are two or more compounds containing any of the lithium element, the element M, and the nitrogen element. The Li-M-N-containing compound may be prepared by a mechanical milling treatment. As the Li-M-N-containing compound, a compound that is industrially produced and sold may be prepared.

As the Li-M-N-containing compound, a lithium composite nitride of the element M is suitably used. Examples of the lithium composite nitride of the element M include lithium composite nitrides such as Li_{1.5}Al_{0.5}N, Li_{1.5}B_{0.5}N, Li_{5/3}Si_{1/3}N, Li_{9/5}Si_{3/10}N, LiMgN, LiHf_{0.5}N, Li_{1.5}Sc_{0.5}N, LiZr_{0.5}N, Li_{5/3}Ti_{1/3}N, Li_{4/3}Ta_{1/3}N, Li_{7/4}Ta_{1/4}N, Li_{7/4}Nb_{1/4}N, and LiC_{0.5}N. Among these examples, Li_{1.5}Al_{0.5}N, Li_{1.5}B_{0.5}N, and Li_{5/3}Si_{1/3}N are preferable because the compounds are easily available. From the viewpoint of suppressing the discharge of the nitrogen element to the outside of the system in a process of producing a solid electrolyte and/or a solid electrolyte for a positive electrode, Li_{1.5}Al_{0.5}N is particularly preferable. One of the compounds containing the nitrogen element may be used alone, or two or more thereof may be used in mixture.

Examples of a compound or the like containing the chlorine element include LiCl, NaCl, KCl, SCl₂, S₂Cl₂, PCl₃, PCl₅, and AlCls. LiCl is preferable. One of the compounds or the like containing the chlorine element may be used alone, or two or more thereof may be used in mixture.

Examples of a compound or the like containing the phosphorus element include P₂S₃, P₂S₅, P₂O₅, P₃N₅, and elemental phosphorus. Among these examples, P₂S₃ and P₂S₅ are preferable, and P₂S₅ is more preferable. One of the compounds or the like containing the phosphorus element may be used alone, or two or more thereof may be used in mixture.

Examples of a compound or the like containing the element A include Li₂S, Li₂O, Li₃N, Li₂CO₃, metallic lithium, Na₂S, Na₂O, Na₃N, Na₂CO₃, metallic sodium, K₂S, K₂O, K₃N, K₂CO₃, and metallic potassium. Alternatively, the compound or the like containing the element A may also be Li_{1.5}Al_{0.5}N, LiCl, or the like described above. Among these examples, Li₂S, Li₃N, Li_{1.5}Al_{0.5}N, and LiCl are preferable. One of the compounds or the like containing the element A may be used alone, or two or more thereof may be used in mixture.

Examples of a compound containing the element M include, in addition to the Li-M-N-containing compound described above, an oxide of the element M, a sulfide of the element M, a nitrides of the element M, and an alloy of the element M and lithium. Examples of the sulfide of the element M include Al₂S₃ and SiS₂. Examples of the nitride of the element M include AlN, Si₃N₄, BN, and Mg₃N₂. Among these examples, the Li-M-N-containing compound is preferable, and Li_{1.5}Al_{0.5}N is more preferable. One of the compounds containing the element M may be used alone, or two or more thereof may be used in mixture.

For example, as one embodiment, the composition may be a composition containing Li₂S, P₂S₅, Li_{1.5}Al_{0.5}N, and LiCl or a composition containing Li₂S, P₂S₅, Li₃N, and LiCl.

The suitable content of each of the elements in the composition is the same as the suitable content of each of the elements in the solid electrolyte (A) according to one embodiment of the present invention and/or the solid electrolyte (C) according to one embodiment of the present invention.

### (Treatment step)

In the production method, the composition is subjected to a treatment to obtain a solid electrolyte and/or a solid electrolyte for a positive electrode. Examples of the treatment include a method for obtaining an intermediate through mechanical milling or the like and then heating the intermediate. The means for obtaining an intermediate is not limited to this mechanical milling or the like, and the intermediate may be obtained by a method other than the mechanical milling, for example, by a melt quenching method.

Examples of the mechanical milling include a case-driven mill, a medium stirring mill, milling with a high-speed rotary crusher or the like, a roller mill, and a jet mill. Examples of the case-driven mill include a rotary mill, a vibration mill, and a planetary mill. Examples of the medium stirring mill include an attritor and a bead mill. Examples of the milling with a high-speed rotary crusher include a hammer mill and a pin mill. Among these examples, a case-driven mill is preferable, and a planetary mill is particularly preferable.

The intermediate obtained through mechanical milling or the like may have a crystal structure, but is preferably so-called sulfide glass. The "sulfide glass" means a sulfide solid electrolyte having an amorphous structure. When the intermediate is sulfide glass, a solid electrolyte and/or a solid electrolyte for a positive electrode can be obtained that has a small amount of a less stable crystal phase such as Li₂S and has the elements highly dispersed therein.

After the treatment such as mechanical milling, the intermediate obtained may be subjected to a pulverization treatment using, for example, a mill (a wet mill or a dry mill) before heating. By performing this pulverization treatment, the solid electrolyte and/or the solid electrolyte for a positive electrode obtained easily attaches to surfaces of particles of a positive active material.

The heating (heat treatment) is performed on the intermediate obtained through mechanical milling or the like. Thereby, a solid electrolyte and/or a solid electrolyte for a positive electrode is obtained in which at least a part of the intermediate is crystallized. The heating (heat treatment) may be performed under a reduced pressure atmosphere or an inert gas atmosphere.

When a solid electrolyte (the solid electrolytes (X), (A), and (B)) is produced, the temperature range of the heating is, for example, preferably 150°C or higher and 450°C or lower, more preferably 200°C or higher and 400°C or lower, still more preferably 250°C or higher and 350°C or lower. By setting the heating temperature to the above range, a solid electrolyte can be obtained that has sufficient ion conductivity and enables the energy storage device to exhibit better charge-discharge performance.

When a solid electrolyte (the solid electrolytes (C) and (D)) for a positive electrode is produced, the temperature range of the heating is, for example, preferably 150°C or higher and 600°C or lower, more preferably 200°C or higher and 550°C or lower. When a solid electrolyte for a positive electrode that has the crystal structure α is produced, the heating temperature is still more preferably 250°C or higher and 350°C or lower. When a solid electrolyte for a positive electrode that has the crystal structure β is obtained, the heating temperature is still more preferably 400°C or higher and 500°C or lower. By setting the heating temperature to the above range, a solid electrolyte for a positive electrode can be obtained that has sufficient oxidation resistance and ion conductivity and enables the energy storage device to exhibit better charge-discharge performance.

### <Composite>

A composite according to one embodiment of the present invention is formed from a positive active material and the solid electrolyte (the solid electrolyte (C) or (D)), according to one embodiment of the present invention, for a positive electrode. A composite according to one embodiment of the present invention is formed from a positive active material and the solid electrolyte (the solid electrolyte (X), (A), or (B)) according to one embodiment of the present invention.

Examples of the composite of a positive active material and the solid electrolyte (or the solid electrolyte for a positive electrode) include a composite that has a chemical or physical bond between a positive active material and the solid electrolyte (or the solid electrolyte for a positive electrode), and a composite obtained by mechanically combining a positive active material with the solid electrolyte (or the solid electrolyte for a positive electrode). The composite may be particles in each of which a positive active material and the solid electrolyte (or the solid electrolyte for a positive electrode) are present, and examples of such a composite include a composite in which a positive active material and the solid electrolyte (or the solid electrolyte for a positive electrode) form an aggregated state, and a composite that includes a positive active material, and a film containing the solid electrolyte (or the solid electrolyte for a positive electrode), and formed on at least a part of a surface of the positive active material.

As the positive active material, a known positive active material can be used. As a positive active material for a lithium ion secondary battery, a material capable of occluding and releasing lithium ions is typically used. Examples of the positive active material include a lithium transition metal composite oxide, a polyanion compound, a chalcogenide, a sulfur-based material and lithium oxide. One or two or more of the positive active materials can be used.

Examples of a transition metal element contained in the lithium transition metal composite oxide include a nickel element, a cobalt element, and a manganese element. The lithium transition metal composite oxide may also contain a typical metal element such as an aluminum element. Examples of the lithium transition metal composite oxide include a lithium transition metal composite oxide having an α-NaFeO₂-type crystal structure, and a lithium transition metal composite oxide having a spinel-type crystal structure.

Examples of the lithium transition metal composite oxide having an α-NaFeO₂-type crystal structure include a composite oxide represented by Li_{1+α}Ma_{1-α}O₂ (Ma is a metal element that includes one or two or more transition metal elements, and is other than a lithium element, and a satisfies 0 < a < 1). Ma preferably includes one or two or more of Ni, Co, or Mn. The total content of Ni, Co, and Mn with respect to the content of Ma ((Ni + Co + Mn)/Ma) is preferably 90 mol% or more, more preferably 98 mol% or more.

Examples of the lithium transition metal composite oxide having a spinel-type crystal structure include a composite oxide represented by Li_{β}Mb₂O₄ (Mb is a metal element including one or two or more transition metal elements, and is other than a lithium element, and β satisfies 0 < β ≤ 1.2). Mb preferably includes Mn. The content of Mn with respect to the content of Mb (Mn/Mb) is preferably 50 mol% or more, more preferably 80 mol% or more.

The polyanion compound is a compound formed of a polyanion (for example, an oxo-acid anion) and a cation. The polyanion compound preferably contains as the cations a lithium cation and a transition metal cation. Examples of the polyanion compound include LiFePO₄, LiMnPO₄, LiMnₓFe₁₋ₓPO₄ (0 < x < 1), LiNiPO₄, LiCoPO₄, Li₃V₂(PO₄)₃, Li₂MnSiO₄, and Li₂CoPO₄F. Particles of the polyanion compound may have surfaces thereof coated with another material (for example, a carbon material described later).

Examples of the chalcogenide include titanium disulfide, molybdenum disulfide, and molybdenum dioxide.

Examples of the sulfur-based material include elemental sulfur, metal sulfides such as lithium sulfide, and organic sulfur compounds such as an organic disulfide compound and a carbon sulfide compound.

Atoms or polyanions in these materials as the positive active materials may be partially substituted with an atom or anion specie composed of another element. These materials may have a surface thereof coated with another material.

The positive active material is typically particles (powder). The average particle size of the positive active material is, for example, preferably 0.1 µm or more and 20 µm or less. By setting the average particle size of the positive active material to greater than or equal to the above lower limit, the positive active material is easily produced or handled. By setting the average particle size of the positive active material to lower than or equal to the above upper limit, the electron conductivity of a positive active material layer is improved. In the case of using a composite of the positive active material and another material, the average particle size of the composite is regarded as the average particle size of the positive active material. The "average particle size" means a value corresponding to 50% in a volume-based cumulative distribution calculated, in accordance with JIS-Z-8819-2 (2001), on the basis of a particle size distribution obtained by measuring a diluted solution, which is obtained by diluting particles with a solvent, by a laser diffraction/scattering method in accordance with JIS-Z-8825 (2013).

In order to obtain a powder with a prescribed particle size, a crusher, a classifier, or the like is used. Examples of a crushing method include a method for using a mortar, a ball mill, a sand mill, a vibratory ball mill, a planetary ball mill, a jet mill, a counter jet mill, a whirling airflow-type jet mill, a sieve, or the like. Wet crushing in which crushing is performed in the presence of water or an organic solvent such as hexane can also be used. As a classification method, a sieve, a wind classifier, or the like is used in a dry or wet manner, as necessary.

Composite particles including particles of the positive active material, the particles having at least a part of surfaces thereof coated with the solid electrolyte (or the solid electrolyte for a positive electrode) according to one embodiment of the present invention, are also one suitable form of the present invention. By including particles of the positive active material, the particles having at least a part of surfaces thereof coated with the solid electrolyte according to one embodiment of the present invention (or the solid electrolyte, according to one embodiment of the present invention, for a positive electrode), the composite particles can exhibit good ion conductivity. The solid electrolyte, according to one embodiment of the present invention, for a positive electrode has higher oxidation resistance and therefore is particularly useful as a solid electrolyte that coats the positive active material. The content of the solid electrolyte (or the solid electrolyte for a positive electrode) in the composite is, for example, preferably 1 mass% or more and 20 mass% or less, more preferably 3 mass% or more and 10 mass% or less.

The composite according to one embodiment of the present invention may further contain a component (for example, a conductive agent) other than the positive active material, the solid electrolyte, and the solid electrolyte for a positive electrode. The total content of the positive active material and the solid electrolyte (or the solid electrolyte for a positive electrode) in the composite is preferably 90 mass% or more, more preferably 99 mass% or more, and may be 100 mass%.

The composite (composite particles) according to one embodiment of the present invention can be produced, for example, by a method for mixing the positive active material, which is particulate or powdered, and the solid electrolyte (or the solid electrolyte for a positive electrode) under application of impact, compression, and shear force. In this production, formation of a composite may be performed by further mixing a component other than the positive active material and the solid electrolyte (or the solid electrolyte for a positive electrode). This composite-forming treatment can be performed, for example, by a treatment using an apparatus including an impeller (also referred to as a rotary blade, a bladed wheel, or the like). The treatment is specifically a treatment using a mechanical kneading method for, by rotating an impeller in a container, applying, between the impeller and a wall surface of the container, impact, compression, and shear force to a mixture of the positive active material and the solid electrolyte (or the solid electrolyte for a positive electrode). The treatment may be performed in a dry or wet manner. Before performing the treatment using an apparatus including an impeller, the positive active material and the solid electrolyte (or the solid electrolyte for a positive electrode) may be mixed in advance. Alternatively, the positive active material and the solid electrolyte (or the solid electrolyte for a positive electrode) may separately be put into an apparatus including an impeller.

### <Positive electrode for energy storage device>

A positive electrode, according to one embodiment of the present invention, for an energy storage device (hereinafter, also called a "positive electrode") contains the solid electrolyte (the solid electrolyte (X), (A), or (B)) according to one embodiment of the present invention, or the solid electrolyte (the solid electrolyte (C) or (D)), according to one embodiment of the present invention, for a positive electrode. The positive electrode contains the solid electrolyte according to one embodiment of the present invention (or the solid electrolyte, according to one embodiment of the present invention, for a positive electrode) and therefore enables an energy storage device to exhibit good charge-discharge performance when the positive electrode is used in the energy storage device. The positive electrode includes a positive substrate and a positive active material layer disposed on the positive substrate directly or with an intermediate layer interposed therebetween. The positive electrode may include an intermediate layer between the positive substrate and the positive active material layer.

The positive electrode may be configured to also include another solid electrolyte other than the solid electrolyte according to one embodiment of the present invention (or the solid electrolyte, according to one embodiment of the present invention, for a positive electrode). Examples of the other solid electrolyte include a sulfide solid electrolyte other than the solid electrolyte according to one embodiment of the present invention (or the solid electrolyte, according to one embodiment of the present invention, for a positive electrode), an oxide solid electrolyte, a dry polymer electrolyte, a gel polymer electrolyte, and a pseudo solid electrolyte. A sulfide solid electrolyte is preferable.

Examples of the sulfide solid electrolyte other than the solid electrolyte according to one embodiment of the present invention (or the solid electrolyte, according to one embodiment of the present invention, for a positive electrode) include Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-LiI, Li₂S-P₂S₅-Li₃N, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘS₂ₙ (m and n are positive numbers, and Z is any of Ge, Zn, and Ga), Li₂S-GeS₂, Li₂S-SiS₂-Li₃PO₄, Li₂S-SiS₂-LiₓMO_{y} (x and y are positive numbers, and M is any of P, Si, Ge, B, Al, Ga, and In), and Li₁₀GeP₂S₁₂.

### (Positive substrate)

The positive substrate has conductivity. It is determined whether or not the positive substrate has "conductivity" by using a volume resistivity of 10⁻² Ω·cm as a threshold, the volume resistivity being measured in accordance with JIS-H-0505 (1975). As a material for the positive substrate, a metal such as aluminum, titanium, tantalum, and stainless steel, or an alloy thereof is used. Among these materials, aluminum or an aluminum alloy is preferable from the viewpoints of electric potential resistance, high conductivity, and costs. Examples of the positive substrate include a foil, a deposited film, a mesh, and a porous material. A foil is preferable from the viewpoint of costs. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 µm or more and 50 µm or less, more preferably 5 µm or more and 40 µm or less, still more preferably 8 µm or more and 30 µm or less, particularly preferably 10 µm or more and 25 µm or less. By setting the average thickness of the positive substrate to the above range, it is possible to enhance the strength of the positive substrate and enhance the energy density per volume of the energy storage device. The "average thickness" is an average value of thicknesses measured at any five positions (hereinafter, the same applies to the average thickness.).

The intermediate layer is a layer disposed between the positive substrate and the positive active material layer. The intermediate layer contains a conductive agent such as carbon particles, and thereby reduces contact resistance between the positive substrate and the positive active material layer. The composition of the intermediate layer is not particularly limited, and the intermediate layer contains, for example, a binder and a conductive agent.

The positive active material layer contains a positive active material and a solid electrolyte (or a solid electrolyte for a positive electrode). The positive active material layer can be formed from a so-called positive mix containing a positive active material and a solid electrolyte (or a solid electrolyte for a positive electrode). The positive active material layer may contain a composite of a positive active material, a solid electrolyte, and the like. The positive active material layer contains, as necessary, an optional component such as a conductive agent, a binder (binding agent), a thickener, and a filler. One or two or more of these optional components do not have to be substantially contained in the positive active material layer.

Specific forms and suitable forms of the positive active material contained in the positive active material layer are the same as the specific forms and the suitable forms of the positive active material in the composite according to one embodiment of the present invention.

The content of the positive active material in the positive active material layer is preferably 10 mass% or more and 95 mass% or less, more preferably 30 mass% or more and 90 mass% or less, still more preferably 50 mass% or more and 85 mass% or less. The lower limit of the content is 60 mass%, and further, the lower limit is even more preferably 70 mass%. By setting the content of the positive active material to the above range, it is possible to, for example, increase the discharge capacity of the energy storage device.

The positive active material layer may contain the solid electrolyte according to one embodiment of the present invention described above. The positive active material layer may contain the solid electrolyte, according to one embodiment of the present invention, for a positive electrode described above. The positive active material layer contains the solid electrolyte according to one embodiment of the present invention (or the solid electrolyte, according to one embodiment of the present invention, for a positive electrode), and may further contain another solid electrolyte. The content of all the solid electrolytes in the positive active material layer is preferably 5 mass% or more and 50 mass% or less, more preferably 10 mass% or more and 40 mass% or less, still more preferably 15 mass% or more and 30 mass% or less. The content of the solid electrolyte according to one embodiment of the present invention (or the solid electrolyte, according to one embodiment of the present invention, for a positive electrode) in all the solid electrolytes of the positive active material layer is preferably 5 mass% or more and 100 mass% or less, more preferably 10 mass% or more and 100 mass% or less, still more preferably 20 mass% or more and 100 mass% or less. By setting the content of the solid electrolyte to the above range, it is possible to, for example, increase the discharge capacity of the energy storage device.

The positive active material layer may contain the composite (composite particles) according to one embodiment of the present invention described above. When the positive active material layer contains the composite, the content of the composite in the positive active material layer is, for example, preferably 40 mass% or more and 99.9 mass% or less, more preferably 50 mass% or more and 99 mass% or less, still more preferably 60 mass% or more and 95 mass% or less, still more preferably 70 mass% or more and 90 mass% or less, even more preferably 75 mass% or more and 85 mass% or less.

The positive active material layer may contain a composite of a positive active material and a solid electrolyte (or a solid electrolyte for a positive electrode), another solid electrolyte, a conductive agent, and a binder. In this form, both the solid electrolyte (or the solid electrolyte for a positive electrode) constituting the composite, and the other solid electrolyte may be the solid electrolytes according to one embodiment of the present invention (or the solid electrolytes, according to one embodiment of the present invention, for a positive electrode). Alternatively, the other solid electrolyte may be a solid electrolyte other than the solid electrolyte according to one embodiment of the present invention (or the solid electrolyte, according to one embodiment of the present invention, for a positive electrode). As the other solid electrolyte, for example, a conventionally known sulfide solid electrolyte can suitably be used. The content of the solid electrolyte, other than the solid electrolyte (or the solid electrolyte for a positive electrode) forming the composite, in the positive active material layer is, for example, preferably 0.1 mass% or more and 16 mass% or less, more preferably 0.5 mass% or more and 14 mass% or less, still more preferably 1 mass% or more and 12 mass% or less, even more preferably 2 mass% or more and 8 mass% or less.

The conductive agent is not particularly limited as long as the conductive agent is a material having conductivity. Examples of such a conductive agent include a carbonaceous material, a metal, and conductive ceramics. Examples of the carbonaceous material include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and a fullerene. Examples of a shape of the conductive agent include a powdery shape and a fibrous shape. As the conductive agent, one of these materials may be used alone, or two or more thereof may be used in mixture. Alternatively, these materials may be used in the form of a composite. For example, a composite material of carbon black and CNTs may be used. The conductive agent is preferably a fibrous conductive agent such as fibrous carbon.

The content of the conductive agent in the positive active material layer is preferably 0.5 mass% or more and 10 mass% or less, more preferably 1 mass% or more and 6 mass% or less. The upper limit of the content of the conductive agent may be 5 mass%, 4 mass%, or 3 mass%. By setting the content of the conductive agent to the above range, it is possible to enhance the energy density of the energy storage device.

Examples of the binder include an aqueous binder and an organic solvent-based binder.

The aqueous binder is a binder that is dissolved or dispersed in water. The aqueous binder may be a binder that is dissolved or dispersed in an amount of 1 part by mass or more relative to 100 parts by mass of water at 20°C. Examples of the aqueous binder include polyethylene oxide, polypropylene oxide, polyvinyl alcohol, polyacrylic acid, polymethacrylic acid, polytetrafluoroethylene, styrene butadiene rubber, polyethylene, polypropylene, nitrile-butadiene rubber, and cellulose.

The organic solvent-based binder is a binder that is dissolved or dispersed in an organic solvent (for example, N-methylpyrrolidone). The organic solvent-based binder may be a binder that is dissolved or dispersed in an amount of 1 part by mass or more relative to 100 parts by mass of N-methylpyrrolidone at 20°C. When the positive active material layer is formed using a positive mix paste containing as a dispersion medium an organic solvent or a mixed solvent containing an organic solvent as a main component, the organic solvent-based binder (a polymer material having solubility or dispersibility in an organic solvent) can be used. Examples of the organic solvent-based binder include polyvinylidene fluoride, a copolymer of vinylidene fluoride and hexafluoropropylene, a copolymer of ethylene and vinyl alcohol, polyacrylonitrile, polyphosphazene, polysiloxane, polyvinyl acetate, polymethyl methacrylate, polystyrene, polycarbonate, a polyamide, a polyimide, a polyamide-imide, a crosslinked polymer of cellulose and chitosan pyrrolidone carboxylate, and a derivative of chitosan.

The binder may also be a fluororesin (e.g., polytetrafluoroethylene and polyvinylidene fluoride), a polyolefin (e.g., polyethylene and polypropylene), an elastomer (e.g., ethylene propylene diene rubber, styrene butadiene rubber, and fluororubber), a polysaccharide polymer (e.g., cellulose and a derivative of chitosan), or the like. One or two or more of the binders can be used.

The content of the binder in the positive active material layer is preferably 0.1 mass% or more and 10 mass% or less, preferably 1 mass% or more and 9 mass% or less, more preferably 3 mass% or more and 8 mass% or less. The upper limit of the content of the binder may be 5 mass%, 4 mass%, or 3 mass%. By setting the content of the binder to the above range, it is possible to, for example, stably hold the positive active material. The technique disclosed herein can be carried out in a form in which the positive active material layer contains no binder.

Examples of the thickener include polysaccharide polymers such as carboxymethylcellulose and methylcellulose. When the thickener contains a functional group that is reactive with lithium or the like, the functional group may be deactivated by methylation or the like in advance. The thickener may function as the binder. One or two or more of the thickeners can be used. When the positive active material layer contains the thickener, the content of the thickener in the positive active material layer is preferably 0.1 mass% or more and 8 mass% or less, more preferably 5 mass% or less, still more preferably 2 mass% or less. The technique disclosed herein can be carried out in a form in which the positive active material layer contains no thickener.

The filler is not particularly limited. The filler is a component other than the positive active material, the solid electrolyte, the conductive agent, the binder, and the thickener, and may be a component intentionally made to be contained. The filler may be contained as a component that fills gaps in the positive active material layer, or may be contained for another purpose of use. The filler may be an organic compound such as a polyolefin, or may be an inorganic compound such as an inorganic oxide, a hydroxide, and a carbonate. One or two or more of the fillers can be used. When the positive active material layer contains the filler, the content of the filler in the positive active material layer can be set to 0.1 mass% or more and 8 mass% or less, and is, typically, preferably 5 mass% or less, more preferably 2 mass% or less. The technique disclosed herein can be carried out in a form in which the positive active material layer contains no filler.

The positive active material layer may further contain another component other than the positive active material, the solid electrolyte, the conductive agent, the binder, the thickener, and the filler. The other component include one unintentionally generated in the positive active material layer. The positive active material layer may also contain, as the other component, an impurity unintentionally contained, as long as the effects of the present invention can be exerted. The upper limit of the content of the other component in the positive active material layer may be 10 mass%, or may be 5 mass%, 2 mass%, 1 mass%, 0.1 mass%, or 0.01 mass%. The upper limit of the content of the component unintentionally generated in the positive active material layer may be 10 mass%, or may be 5 mass%, 2 mass%, 1 mass%, 0.1 mass%, or 0.01 mass%. The upper limit of the content of the impurity unintentionally contained in the positive active material layer may be 10 mass%, or may be 5 mass%, 2 mass%, 1 mass%, 0.1 mass%, or 0.01 mass%.

The thickness and the like of the positive active material layer is set as appropriate according to, for example, the type of the positive active material and the purpose of use of the energy storage device. The average thickness of the positive active material layer as one layer may be, for example, 5 µm or more and 1,000 µm or less, and is preferably 30 µm or more and 1,000 µm or less, more preferably 60 µm or more and 500 µm or less. The lower limit of the average thickness of the positive active material layer as one layer may be 5 µm, 10 µm, 20 µm, 30 µm, 40 µm, 50 µm, 60 µm, or 100 µm. The upper limit of the average thickness of the positive active material layer as one layer may be 1000 µm, 800 µm, 500 µm, 200 µm, 100 µm, 80 µm, 60 µm, or 40 µm. The average thickness of the positive active material layer as one layer may be greater than or equal to any of the above lower limits and lower than or equal to any of the above upper limits (the lower limit is to be a smaller value than the value of the upper limit). By setting the average thickness of the positive active material layer to greater than or equal to the above lower limit, it is possible to obtain the energy storage device with high energy density. By setting the average thickness of the positive active material layer to lower than or equal to the above upper limit, it is possible to, for example, reduce the size of the energy storage device.

The mass per unit area of the positive active material layer as one layer may be, for example, 4 mg/cm² or more and 100 mg/cm² or less. The lower limit of the mass per unit area of the positive active material layer as one layer may be 6 mg/cm², 8 mg/cm², or 10 mg/cm². The upper limit of the mass per unit area of the positive active material layer as one layer may be 50 mg/cm², 20 mg/cm², 15 mg/cm², 12 mg/cm², or 10 mg/cm². The mass per unit area of the positive active material layer as one layer may be greater than or equal to any of the above lower limits and lower than or equal to any of the above upper limits (the lower limit is to be a smaller value than the value of the upper limit).

### <Energy storage device>

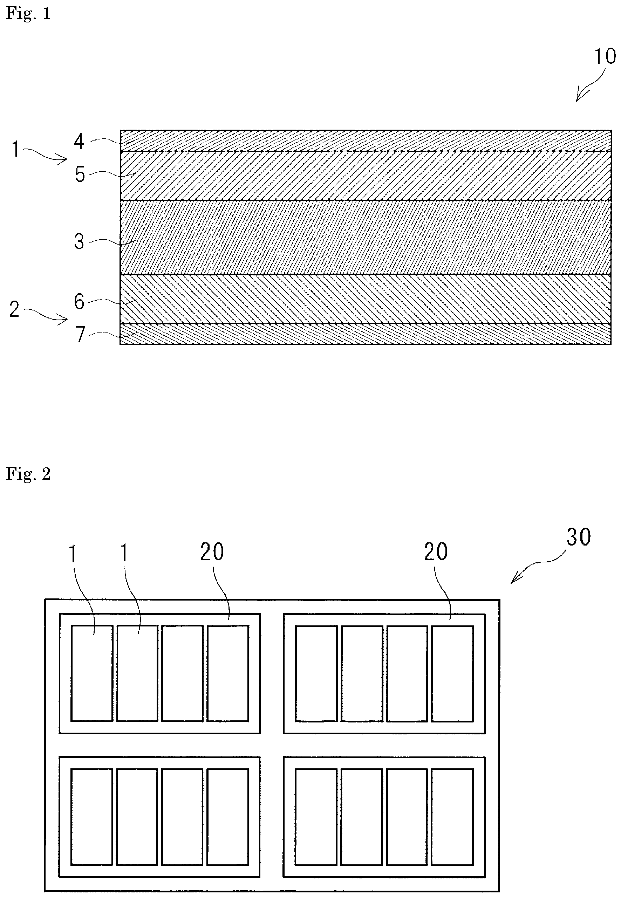

Hereinafter, as a specific example of an energy storage device according to one embodiment of the present invention, an all-solid-state battery will be described. An energy storage device 10 of Fig. 1 is an all-solid-state battery, and is a secondary battery in which a positive electrode 1 and a negative electrode 2 are disposed with an isolation layer 3 interposed therebetween. The positive electrode 1 includes a positive substrate 4 and a positive active material layer 5, and the positive substrate 4 is the outermost layer of the positive electrode 1. The negative electrode 2 includes a negative substrate 7 and a negative active material layer 6, and the negative substrate 7 is the outermost layer of the negative electrode 2. In the energy storage device 10 illustrated in Fig. 1, the negative active material layer 6, the isolation layer 3, the positive active material layer 5, and the positive substrate 4 are stacked in this order on the negative substrate 7.

In the energy storage device 10 according to one embodiment of the present invention, at least one of the positive electrode 1, the negative electrode 2, or the isolation layer 3 contains the solid electrolyte (the solid electrolyte (X), (A), or (B)) according to one embodiment of the present invention. More specifically, the solid electrolyte according to one embodiment of the present invention is contained in at least one of the positive active material layer 5, the negative active material layer 6, or the isolation layer 3. When the solid electrolyte according to one embodiment of the present invention is contained in the positive electrode 1, the positive electrode 1 is the positive electrode, according to one embodiment of the present invention, for an energy storage device. The energy storage device 10 includes the solid electrolyte according to one embodiment of the present invention and therefore can exhibit good charge-discharge performance.

The energy storage device 10 may be configured to also include another solid electrolyte other than the solid electrolyte according to one embodiment of the present invention. Examples of the other solid electrolyte include the examples indicated in the description of the positive electrode. A sulfide solid electrolyte is preferable. One layer in the energy storage device 10 may contain therein a plurality of different solid electrolytes, or layers may respectively contain different solid electrolytes.

An energy storage device 10 according to another embodiment of the present invention includes a positive electrode 1 containing the solid electrolyte (the solid electrolyte (C) or (B)), according to one embodiment of the present invention, for a positive electrode. The solid electrolyte for a positive electrode may be contained as a composite with a positive active material in the positive electrode 1. More specifically, the solid electrolyte, according to one embodiment of the present invention, for a positive electrode is contained in a positive active material layer 5. The energy storage device 10 includes the positive electrode containing the solid electrolyte, according to one embodiment of the present invention, for a positive electrode and therefore can exhibit good charge-discharge performance.

The energy storage device 10 may be configured to also include another solid electrolyte other than the solid electrolyte, according to one embodiment of the present invention, for a positive electrode. Examples of the other solid electrolyte include the examples indicated in the description of the positive electrode. A sulfide solid electrolyte is preferable. One layer in the energy storage device 10 may contain therein a plurality of different solid electrolytes, or layers may respectively contain different solid electrolytes.

### (Positive electrode)

The positive electrode 1 includes the positive substrate 4 and the positive active material layer 5 disposed on the positive substrate 4 directly or with the intermediate layer interposed therebetween. In one embodiment of the present invention, the positive electrode according to one embodiment of the present invention described above is used as the positive electrode 1.

### (Negative electrode)

The negative electrode 2 includes the negative substrate 7 and the negative active material layer 6 disposed on the negative substrate 7 directly or with the intermediate layer interposed therebetween. The composition of the intermediate layer is not particularly limited, and, for example, can be selected from the compositions indicated for the positive electrode according to one embodiment of the present invention.

The negative substrate 7 has conductivity. As a material for the negative substrate 7, a metal such as copper, nickel, stainless steel, nickel-plated steel, and aluminum, an alloy thereof, a carbonaceous material, or the like is used. Among these materials, copper or a copper alloy is preferable. Examples of the negative substrate 7 include a foil, a deposited film, a mesh, and a porous material. A foil is preferable from the viewpoint of costs. Accordingly, the negative substrate 7 is preferably a copper foil or a copper alloy foil. Examples of the copper foil include a rolled copper foil and an electrolytic copper foil.

The average thickness of the negative substrate 7 is preferably 2 µm or more and 35 µm or less, more preferably 3 µm or more and 30 µm or less, still more preferably 4 µm or more and 25 µm or less, particularly preferably 5 µm or more and 20 µm or less. By setting the average thickness of the negative substrate 7 to the above range, it is possible to enhance the strength of the negative substrate 7 and enhance the energy density per volume of the energy storage device 10.

The negative active material layer 6 contains a negative active material. The negative active material layer 6 can be formed from a so-called negative mix containing a negative active material. The negative active material layer 6 may also contain a solid electrolyte, or may contain a composite of a negative active material, a solid electrolyte, and the like. The negative active material layer 6 contains, as necessary, an optional component such as a conductive agent, a binder, a thickener, and a filler. The types and suitable contents of these optional components in the negative active material layer 6 are the same as those of the optional components in the positive active material layer described above. One or two or more of these optional components do not have to be substantially contained in the negative active material layer 6.

The negative active material layer 6 may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Ta, Hf, Nb, and W, as a component other than the negative active material, the solid electrolyte, the conductive agent, the binder, the thickener, and the filler.

The negative active material can be selected as appropriate from known negative active materials. As a negative active material for a lithium ion secondary battery, a material capable of occluding and releasing lithium ions is typically used. Examples of the negative active material include metallic lithium; metals or metalloids such as Si and Sn; metal oxides or metalloid oxides such as Si oxide, Ti oxide, and Sn oxide; titanium-containing oxides such as Li₄Ti₅O₁₂, LiTiO₂, and TiNb₂O₇; polyphosphoric acid compounds; silicon carbide; and carbon materials such as graphite and non-graphitic carbon (easily graphitizable carbon or hardly graphitizable carbon). Among these materials, graphite and non-graphitic carbon are preferable. In the negative active material layer 6, one of these materials may be used alone, or two or more thereof may be used in mixture.

The "graphite" refers to a carbon material in which the average lattice spacing (d₀₀₂) of the (002) plane determined by an X-ray diffraction method is 0.33 nm or more and less than 0.34 nm before charge-discharge or in a discharged state. Examples of the graphite include natural graphite and artificial graphite. Artificial graphite is preferable from the viewpoint that a material having stable physical properties can be obtained.

The "non-graphitic carbon" refers to a carbon material in which the average lattice spacing (d₀₀₂) of the (002) plane determined by an X-ray diffraction method is 0.34 nm or more and 0.42 nm or less before charge-discharge or in a discharged state. Examples of the non-graphitic carbon include hardly graphitizable carbon and easily graphitizable carbon. Examples of the non-graphitic carbon include a resin-derived material, a petroleum pitch or a petroleum pitch-derived material, a petroleum coke or a petroleum coke-derived material, a plant-derived material, and an alcohol-derived material.

Here, the "discharged state" means a state of the carbon material, as the negative active material, that is discharged by sufficiently releasing lithium ions that can be occluded and released in association with charge and discharge. For example, the "discharged state" of a half cell that includes, as a working electrode, a negative electrode containing a carbon material as a negative active material, and includes metallic lithium as a counter electrode is that the half cell has an open circuit voltage of 0.7 V or higher.

The "hardly graphitizable carbon" refers to a carbon material in which the d₀₀₂ is 0.36 nm or more and 0.42 nm or less.

The "easily graphitizable carbon" refers to a carbon material in which the d₀₀₂ is 0.34 nm or more and less than 0.36 nm.

The negative active material is typically particles (powder). The average particle size of the negative active material can be set to, for example, 1 nm or more and 100 µm or less. When the negative active material is a carbon material, a titanium-containing oxide, or a polyphosphoric acid compound, the average particle size thereof may be 1 µm or more and 100 µm or less. When the negative active material is Si, Sn, Si oxide, Sn oxide, or the like, the average particle size thereof may be 1 nm or more and 1 µm or less. By setting the average particle size of the negative active material to greater than or equal to the above lower limit, the negative active material is easily produced or handled. By setting the average particle size of the negative active material to lower than or equal to the above upper limit, the electron conductivity of the negative active material layer 6 is improved. In order to obtain a powder with a prescribed particle size, a crusher, a classifier, or the like is used. A crushing method and a classification method can be selected, for example, from the methods indicated for the positive electrode according to one embodiment of the present invention. When the negative active material is a metal such as metallic lithium, the negative active material layer 6 may have a foil shape.

The content of the negative active material in the negative active material layer 6 is preferably 10 mass% or more and 100 mass% or less, more preferably 30 mass% or more and 95 mass% or less. The lower limit of the content is 50 mass%, and further, more preferably 70 mass%. When the negative active material is a metal such as metallic lithium, the lower limit of the content of the negative active material in the negative active material layer 6 may be 95 mass% or 99 mass%. By setting the content of the negative active material to the above range, it is possible to, for example, increase the discharge capacity of the energy storage device 10.

When the negative active material layer 6 contains the solid electrolyte, the content of the solid electrolyte is preferably 5 mass% or more and 90 mass% or less, more preferably 20 mass% or more and 70 mass% or less. This upper limit is sometimes still more preferably 50 mass%. By setting the content of the solid electrolyte to the above range, it is possible to, for example, increase the discharge capacity of the energy storage device 10.

The composite of the negative active material, the solid electrolyte, and the like can be considered as one obtained by replacing the positive active material with the negative active material in the composite of the positive active material, the solid electrolyte, and the like described above.

The average thickness of the negative active material layer 6 is preferably 30 µm or more and 1,000 µm or less, more preferably 60 µm or more and 500 µm or less. By setting the average thickness of the negative active material layer 6 to greater than or equal to the above lower limit, it is possible to obtain the energy storage device 10 with high energy density. By setting the average thickness of the negative active material layer 6 to lower than or equal to the above upper limit, it is possible to, for example, reduce the size of the energy storage device 10.

### (Isolation layer)

The isolation layer 3 contains a solid electrolyte. The content of the solid electrolyte in the isolation layer 3 is preferably 70 mass% or more, more preferably 90 mass% or more, still more preferably 99 mass% or more, even more preferably substantially 100 mass% in some cases.

The isolation layer 3 may also contain an optional component such as a phosphoric acid compound, e.g., Li₃PO₄, an oxide, a halogen compound, a binder, a thickener, and a filler. The optional components such as a binder, a thickener, and a filler can be selected from the materials indicated for the positive active material layer.

The average thickness of the isolation layer 3 is preferably 1 µm or more and 50 µm or less, more preferably 3 µm or more and 20 µm or less. By setting the average thickness of the isolation layer 3 to greater than or equal to the above lower limit, it is possible to insulate the positive electrode 1 from the negative electrode 2 with high reliability. By setting the average thickness of the isolation layer 3 to lower than or equal to the above upper limit, it is possible to enhance the energy density of the energy storage device 10.

### <Energy storage apparatus>

The energy storage device according to the present embodiment can be mounted, as an energy storage unit (battery module) configured by assembling a plurality of energy storage devices, on, for example, a power source for automobiles such as an electric vehicle (EV), a hybrid electric vehicle (HEV), and a plug-in hybrid electric vehicle (PHEV), a power source for electronic devices such as a personal computer and a communication terminal, or a power source for power storage. In this case, the technique of the present invention only has to be applied to at least one energy storage device included in the energy storage unit.

Fig. 2 illustrates one example of an energy storage apparatus 30 formed by assembling energy storage units 20 each of which is formed by assembling two or more energy storage devices 10 electrically connected to each other. The energy storage apparatus 30 may include, for example, a busbar (not illustrated) electrically connecting two or more energy storage devices 10, and a busbar (not illustrated) electrically connecting two or more energy storage units 20. The energy storage unit 20 or the energy storage apparatus 30 may include a state monitor (not illustrated) that monitors the state of one or more energy storage devices 10.

### <Method for producing energy storage device>

A method, according to one embodiment of the present invention, for producing an energy storage device can be performed by a commonly known method except that the solid electrolyte according to one embodiment of the present invention is used as a part of or all of a solid electrolyte to prepare at least one of a positive electrode, an isolation layer, or a negative electrode. The method, according to one embodiment of the present invention, for producing an energy storage device can also be performed by a commonly known method except that the solid electrolyte, according to one embodiment of the present invention, for a positive electrode is used as a part of or all of a solid electrolyte to prepare a positive electrode. Specifically, the production method includes, for example, (1) preparing a positive mix, (2) preparing an isolation layer material, (3) preparing a negative mix, and (4) stacking a positive electrode, an isolation layer, and a negative electrode. Hereinafter, each of the steps will be described in detail.

### (1) Step of preparing positive mix

In the present step, typically, a positive mix for forming a positive electrode (positive active material layer) is prepared. A method for preparing a positive mix is not particularly limited, and can be selected as appropriate according to the purpose. Examples of the method include a mechanical milling treatment of materials for a positive mix, compression molding of a positive active material, and sputtering with use of a target material of a positive active material. When the positive mix contains a positive active material, a solid electrolyte, and the like, the positive active material, the solid electrolyte, and the like can be mixed using, for example, a mechanical milling method. It is also possible to produce a composite of a positive active material, a solid electrolyte, and the like in advance by the method described above or the like, and mix the composite obtained with another component.

### (2) Step of preparing isolation layer material

In the present step, typically, an isolation layer material for forming an isolation layer is prepared. When the energy storage device is an all-solid-state energy storage device, a solid electrolyte can be used as the isolation layer material. The solid electrolyte as the isolation layer material can be prepared by a conventionally known method. For example, prescribed materials can be subjected to a treatment performed by a mechanical milling method to obtain the solid electrolyte. The isolation layer material may also be prepared by a melt quenching method including heating prescribed materials to the melting temperature thereof or higher to melt and mix both materials at a prescribed ratio, and quenching the melted mixture. Examples of another method for synthesizing an isolation layer material include a solid phase method including encapsulating materials under reduced pressure, followed by firing, a liquid phase method such as dissolution-precipitation, a gas phase method (pulsed laser deposition (PLD)), and mechanically milling materials, followed by firing under an argon atmosphere.

### (3) Step of preparing negative mix

In the present step, typically, a negative mix for forming a negative electrode (negative active material layer) is prepared. A specific method for preparing a negative mix is the same as that for the positive mix.

### (4) Stacking step

In the present step, for example, a positive electrode including a positive substrate and a positive active material layer, an isolation layer, and a negative electrode including a negative substrate and a negative active material layer are stacked. In the present step, a positive electrode, an isolation layer, and a negative electrode may be sequentially formed in this order, or vice versa, and the order of forming the layers is not particularly limited. The positive electrode is formed, for example, by pressure-molding a positive substrate and a positive mix, the isolation layer is formed by pressure-molding an isolation layer material, and the negative electrode is formed by pressure-molding a negative substrate and a negative mix. The positive electrode, the isolation layer, and the negative electrode may be stacked by pressure-molding a positive substrate, a positive mix, an isolation layer material, a negative mix, and a negative substrate at a time. The positive electrode and the negative electrode may each be formed in advance, and stacked with the isolation layer by pressure-molding.

### <Other embodiments>

The solid electrolyte, the solid electrolyte for a positive electrode, the composite, the positive electrode for an energy storage device, and the energy storage device, each according to the present invention, are not limited to the embodiments described above, and various changes may be added without departing from the gist of the present invention. For example, to the configuration of an embodiment, the configuration of another embodiment can be added, or a part of the configuration of an embodiment can be replaced with the configuration of another embodiment or a well-known technique. Further, a part of the configuration of an embodiment can be removed. In addition, a well-known technique can be added to the configuration of an embodiment.

For example, the energy storage device according to the present invention may include another layer other than the positive electrode, the isolation layer, and the negative electrode. The present invention can also be applied to an energy storage device including a bipolar electrode. In addition, the energy storage device according to the present invention may include a liquid. Examples of such an energy storage device include an energy storage device in which voids of the positive active material layer 5, the isolation layer 3, the negative active material layer 6, and the like in the energy storage device 10 are filled with a nonaqueous electrolyte solution or the like containing an Ionic liquid or the like. The energy storage device according to the present invention is an energy storage device as a secondary battery, or may also be a capacitor or the like.

In the embodiments described above, the energy storage device according to the present invention has been described mainly in terms of the form in which the solid electrolyte according to the present invention is used for a positive electrode. However, an energy storage device in which the solid electrolyte according to the present invention is used not for a positive electrode but used for a negative electrode and/or an isolation layer is also one embodiment of the present invention. The solid electrolyte according to the present invention may be used for some of a positive electrode, an isolation layer, and a negative electrode.

### EXAMPLES

Hereinafter, the present invention will be described more specifically by way of examples, but the present invention is not limited to the following examples.

### [Example 1]

A solid electrolyte of Example 1 satisfying the composition ratio shown in Table 2 was synthesized by the following treatment.

First, Li₃N and AlN were weighed at a molar ratio of 1.2 : 1, mixed in a mortar, and then pelletized. Next, the pellets were subjected to a heat treatment at 750°C for 1 hour to prepare Li_{1.5}Al_{0.5}N. These steps were performed under an argon atmosphere with a dew point of -50°C or lower. The prepared Li_{1.5}Al_{0.5}N was, by X-ray diffraction measurement, confirmed to contain Li_{1.5}Al_{0.5}N as a main phase.

In a glove box of an argon atmosphere with a dew point of -50°C or lower, Li₂S (99.98%, Aldrich), P₂S₅ (99%, manufactured by Aldrich), Li_{1.5}Al_{0.5}N, and LiCI (99.999%, manufactured by Aldrich) were weighed at a molar ratio of 50.4 : 21.6 : 18.0 : 10.0, and then mixed in a mortar to prepare a composition containing a sulfur element, a nitrogen element, a chlorine element, a phosphorus element, a lithium element as the element A, and an aluminum element as the element M.

The composition (3.5 g) was put into a closed 250-mL zirconia pot containing 500 g of zirconia balls of 4 mm in diameter. A mechanical milling treatment was performed for 45 hours at the number of revolutions of 370 rpm by a planetary ball mill (manufactured by FRITSCH GmbH, model number: Classic line P-5).

Next, the composition (1.0 g) having undergone the treatment was put into a closed 80-mL zirconia pot containing 50 g of zirconia balls of 0.3 mm in diameter. A mixed solution of heptane and dibutyl ether (mass ratio 8 : 2) was further added into this zirconia pot, a pulverization treatment using a wet mill was performed for 20 hours at the number of revolutions of 150 rpm by a planetary ball mill (manufactured by FRITSCH GmbH, model number: Premium line PL-7), and an intermediate was thus obtained.

The intermediate was heated (heat-treated) at 270°C for 2 hours, and a solid electrolyte of Example 1 was thus obtained.

### [Comparative Example 1]

A solid electrolyte of Comparative Example 1 satisfying the composition ratio shown in Table 2 was obtained similarly to Example 1 except that LiCl was not used as a raw material compound and the intermediate was heated (heat-treated) at 320°C for 2 hours.

### [Example 2]

A solid electrolyte of Example 2 was obtained similarly to Example 1 except that the pulverization treatment was not performed.

### [Comparative Example 2]

A solid electrolyte of Comparative Example 2 was obtained similarly to Comparative Example 1 except that the pulverization treatment was not performed.

### [X-ray diffraction measurement]

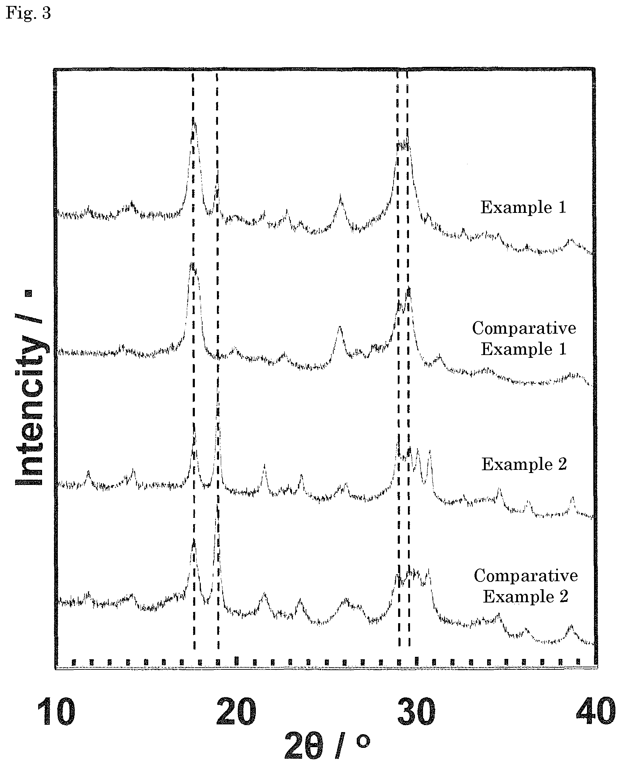

The solid electrolytes of Examples 1 and 2 and Comparative Examples 1 and 2 were subjected to powder X-ray diffraction measurement performed by the method described above. Fig. 3 illustrates the X-ray diffraction diagrams obtained. Although there was a difference between the diagrams according to the treatment method or the like, it could be confirmed that all the solid electrolytes had a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5°, any of the different diffraction peaks being a maximum diffraction peak.

### [Measurement of ion conductivity]

The ion conductivity at 25°C (σ₂₅) of the solid electrolytes of Example 1 and Comparative Example 1 was determined by measuring the alternating-current impedance by the method described above, using "VMP-300" manufactured by Bio-Logic Science Instruments. Table 2 shows the measurement results.

### [Preparation of energy storage device]

Particles of LiNi_{0.5}Co_{0.2}Mn_{0.3}O₂ having surfaces thereof coated with LiNbO₃ were used as a positive active material. The positive active material, the solid electrolyte of Example 1 or Comparative Example 1, an argyrodite-type solid electrolyte, fibrous carbon ("VGCF (registered trade name)" manufactured by Showa Denko K.K.) as a conductive agent, and styrene butadiene rubber (SBR) as a binder were mixed at a mass ratio of 76 : 4 : 16 : 2 : 2 to prepare a positive mix. Further, an argyrodite-type solid electrolyte that is a solid electrolyte was prepared as an isolation layer material. Using an aluminum foil as a positive substrate, the positive mix, the isolation layer material, and a negative electrode obtained by attaching a metallic lithium foil to a metallic indium foil, an energy storage device (test cell) was prepared that had a layer structure of a positive electrode, an isolation layer, and the negative electrode.

### [Charge-discharge test]

The energy storage devices obtained were subjected to a charge-discharge test at 50°C in the following manner. Constant current constant voltage charge was performed at a current of 0.1 C and an end-of-charge voltage of 3.75 V. A charge termination condition was performing the charge until the current reached 0.025 C. This was followed by a break period of 10 minutes. Thereafter, constant current discharge was performed at a current of 0.1 C and an end-of-discharge voltage of 2.25 V. The ratio of the discharge capacity to the initial charge capacity was determined as initial charge-discharge efficiency.

Next, the energy storage devices were charged and discharged similarly to described above except that the constant current discharge was performed at a current of 3 C. The ratio of the discharge capacity at a current of 3C to the discharge capacity at 0.1 C was determined as a high-rate discharge capacity ratio.

Next, the energy storage devices were subjected to a charge-discharge cycle test performed in the following manner. Constant current constant voltage charge was performed at a current of 0.2 C and an end-of-charge voltage of 3.75 V. A charge termination condition was performing the charge until the current reached 0.05 C. This was followed by a break period of 10 minutes. Thereafter, constant current discharge was performed at a current of 0.2 C and an end-of-discharge voltage of 2.25 V. This was followed by a break period of 10 minutes. This charge-discharge was performed 50 cycles. The ratio of the discharge capacity of the 50th cycle to the discharge capacity of the first cycle was determined as a capacity retention ratio.

Table 2 shows the results of the initial charge-discharge efficiency, the high-rate discharge capacity ratio, and the capacity retention ratio.

**[Table 2]**

| | Solid electrolyte | *δ*₂₅ /mS/cm | Initial charge-discharge efficiency /% | High-rate discharge capacity ratio /% | Capacity retention ratio /% |
|---|---|---|---|---|---|
| Example 1 | Li_{3.19}PS_{3.67}Al_{0.21}N_{0.42}Cl_{0.23} (90(0.8(0.7Li₂S·0.3P₂S₃)·0.2Li_{1.5}Al_{0.5}N)·10LiCl) | 1.1 | 83.7 | 68.4 | 90.5 |
| Comparative Example 1 | Li_{2.96}PS_{3.67}Al_{0.21}N_{0.42} (80(0.7Li₂S·0.3P₂S₅)·20Li_{1.5}Al_{0.5}N) | 1.0 | 82.2 | 56.5 | 88.5 |

As shown in Table 2, the energy storage device that included the positive electrode containing the solid electrolyte of Example 1 was higher in all of the initial charge-discharge efficiency, the high-rate discharge capacity ratio, and the capacity retention ratio than the energy storage device that included the positive electrode containing the solid electrolyte of Comparative Example 1, and the energy storage device the included the positive electrode containing the solid electrolyte of Example 1 exhibited good charge-discharge performance. For example, since the solid electrolytes of Example 1 and Comparative Example 1 had the same level of ion conductivity, the solid electrolyte of Example 1 is presumed to have increased the charge-discharge performance by having higher oxidation resistance.

### [Example 3]

A solid electrolyte of Example 3 satisfying the composition formula shown in Table 3 was synthesized by the following treatment.

In a glove box of an argon atmosphere with a dew point of -50°C or lower, Li₂S (99.98%, manufactured by Aldrich), P₂S₅ (99%, manufactured by Aldrich), Li₃N (99.5%, manufactured by Aldrich), and LiCI (99.999%, manufactured by Aldrich) were, as raw material compounds, weighed at a molar ratio of 47.25 : 22.50 : 13.50 : 10.0, and then mixed in a mortar to prepare a composition containing a sulfur element, a nitrogen element, a chlorine element, a phosphorus element, and a lithium element as the element A.

The composition (3.5 g) was put into a closed 250-mL zirconia pot containing 500 g of zirconia balls of 4 mm in diameter. A mechanical milling treatment was performed for 45 hours at the number of revolutions of 370 rpm by a planetary ball mill (manufactured by FRITSCH GmbH, model number: Classic line P-5), and an intermediate was thus obtained.

The intermediate was heated (heat-treated) at 310°C for 2 hours, and a solid electrolyte of Example 3 was thus obtained.

### [Comparative Example 3]

A solid electrolyte of Comparative Example 3 was obtained similarly to Example 3 except that the types of raw material compounds and the molar ratio therebetween were set as shown in Table 3.

### [Example 4]

The solid electrolyte obtained in Example 2 was used as a solid electrolyte of Example 4. Table 3 shows the types of raw material compounds, the molar ratio therebetween, and the heat treatment temperature.

### [Comparative Example 4]

The solid electrolyte obtained in Comparative Example 2 was used as a solid electrolyte of Comparative Example 4. Table 3 shows the types of raw material compounds, the molar ratio therebetween, and the heat treatment temperature.

### [X-ray diffraction measurement]

The solid electrolytes of Example 3 and Comparative Example 3 were subjected to powder X-ray diffraction measurement performed by the method described above. It could be confirmed that both the solid electrolytes had a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5°, any of the different diffraction peaks being a maximum diffraction peak.

### [Measurement of ion conductivity]

The ion conductivity at 25°C (σ₂₅) of the solid electrolytes of Examples 3 and 4 and Comparative Examples 3 and 4 was determined by measuring the alternating-current impedance by the method described above, using "VMP-300" manufactured by Bio-Logic Science Instruments. Table 3 shows the measurement results.

### [Evaluation of oxidation resistance]

The following measurement cells were prepared using the solid electrolytes of Examples 3 and 4 and Comparative Examples 3 and 4, subjected to square wave voltammetry (SWV) measurement, and evaluated for oxidation resistance.

Under an argon atmosphere with a dew point of -50°C or lower, 80 mg of a sample powder (solid electrolyte to be measured) were put into a powder molder of 10 mm in inner diameter, and then subjected to uniaxial pressure molding at 50 MPa or less, using a hydraulic press. After releasing the pressure, the sample had a graphite powder put onto an upper surface thereof, and then was subjected again to uniaxial pressure molding at 360 MPa for 5 minutes, using a hydraulic press. Next, the sample had a metal foil disposed on a lower surface thereof, the metal foil being obtained by attaching a metallic lithium foil to a metallic indium foil, and then was subjected to uniaxial pressure molding at 50 MPa or less. A pellet measurement cell was thereby obtained. This measurement cell was subjected to SWV measurement under the following measurement conditions while pressed in the stacking direction, with a pressing jig at a torque of 50 cNm.

### (SWV measurement conditions)

Voltage amplitude: 20 mV
Relaxation time: 50 ms
Step voltage: 1 mV
Voltage range: OCV to 4.5 V
Measurement temperature: 50°C

Table 3 shows the peak currents I_{MAX} measured. The measurement cell having a small peak current I_{MAX} can be determined to have higher oxidation resistance.

**[Table 3]**

| | Raw material compounds (molar ratio) | | | | | Solid electrolyte | Heat treatment temperature /°C | *δ*₂₅ /mS/cm | I_{MAX} / µA |
|---|---|---|---|---|---|---|---|---|---|
| | Li₂S | P₂S₅ | Li_{1.5}Al_{0.5}N | Li₃N | LiCl | Composition formula | | | |
| Comparative Example 3 | 52.50 | 25.00 | 0.00 | 15.00 | 0.00 | Li_{3.00}PS_{3.55}N_{0.30} | 310 | 1.1 | 29.1 |
| Example 3 | 47.25 | 22.50 | 0.00 | 13.50 | 10.00 | Li_{3.22}PS_{3.55}N_{0.30}Cl_{0.22} | 310 | 0.8 | 12.0 |
| Comparative Example 4 | 56.00 | 24.00 | 20.00 | 0.00 | 0.00 | Li_{2.96}PS_{3.67}Al_{0.21}N_{0.42} | 320 | 1.8 | 21.3 |
| Example 4 | 50.40 | 21.60 | 18.00 | 0.00 | 10.00 | Li_{3.19}PS_{3.67}Al_{0.21}N_{0.42}Cl_{0.23} | 270 | 1.5 | 18.4 |

As shown in Table 3, the solid electrolyte of Example 3 having the chlorine element added thereto is, from the values of I_{MAX}, understood to have higher oxidation resistance than the oxidation resistance of the solid electrolyte of Comparative Example 3. Similarly, the solid electrolyte of Example 4 having the chlorine element added thereto is also understood to have higher oxidation resistance than the oxidation resistance of the solid electrolyte of Comparative Example 4. The solid electrolytes of Examples 1 and 4 have the same elemental composition and crystal structure. Similarly, the solid electrolytes of Comparative Examples 1 and 4 have the same elemental composition and crystal structure. Accordingly, these results verify that because the solid electrolyte of Example 1 had higher oxidation resistance, the energy storage device that included the positive electrode containing the solid electrolyte of Example 1 exhibited better charge-discharge performance than the charge-discharge performance of the energy storage device that included the positive electrode containing the solid electrolyte of Comparative Example 1. The energy storage device that included the solid electrolyte of example 3 similarly having higher oxidation resistance can be presumed to also exhibit good charge-discharge performance.

### [Example 5]

A solid electrolyte of Example 5 satisfying the composition formula shown in Table 4 was synthesized by the following treatment.

In a glove box of an argon atmosphere with a dew point of -50°C or lower, Li₂S (99.98%, manufactured by Aldrich), P₂S₅ (99%, manufactured by Aldrich), Li₃N (99.5%, manufactured by Aldrich), and LiCI (99.999%, manufactured by Aldrich) were, as raw material compounds, weighed at a molar ratio of 47.25 : 22.50 : 13.50 : 10.00, and then mixed in a mortar to prepare a composition containing a sulfur element, a nitrogen element, a chlorine element, a phosphorus element, and a lithium element as the element A.

The composition (3.5 g) was put into a closed 250-mL zirconia pot containing 500 g of zirconia balls of 4 mm in diameter. A mechanical milling treatment was performed for 45 hours at the number of revolutions of 370 rpm by a planetary ball mill (manufactured by FRITSCH GmbH, model number: Classic line P-5), and an intermediate was thus obtained.

The intermediate was heated (heat-treated) at 310°C for 2 hours, and a solid electrolyte of Example 5 was thus obtained.

### [Example 6 and Comparative Examples 5 and 6]

Solid electrolytes of Example 6 and Comparative Examples 5 and 6 were obtained similarly to Example 5 except that the types of raw material compounds, the molar ratio therebetween, and the heat treatment temperature were set as shown in Table 4.

The raw material compound Li_{1.5}Al_{0.5}N was prepared by the following procedure. First, Li₃N and AlN were weighed at a molar ratio of 1.2 : 1, mixed in a mortar, and then pelletized. Next, the pellets were subjected to a heat treatment at 750°C for 1 hour to prepare Li_{1.5}Al_{0.5}N. These steps were performed under an argon atmosphere with a dew point of -50°C or lower. The prepared Li_{1.5}Al_{0.5}N was, by X-ray diffraction measurement, confirmed to contain Li_{1.5}Al_{0.5}N as a main phase.

### [Example 7]

A solid electrolyte of Example 7 satisfying the composition formula shown in Table 5 was synthesized by the following treatment.

In a glove box of an argon atmosphere with a dew point of -50°C or lower, Li₂S (99.98%, manufactured by Aldrich), P₂S₅ (99%, manufactured by Aldrich), Li₃N (99.5%, manufactured by Aldrich), and LiCI (99.999%, manufactured by Aldrich) were, as raw material compounds, weighed at a molar ratio of 60.00 : 12.50 : 2.50 : 25.00, and then mixed in a mortar to prepare a composition containing a sulfur element, a nitrogen element, a chlorine element, a phosphorus element, and a lithium element as the element A.

The composition (1.0 g) was put into a closed 80-mL zirconia pot containing 160 g of zirconia balls of 4 mm in diameter. The composition was subjected to a mechanical milling treatment for 25 hours at the number of revolutions of 370 rpm by a planetary ball mill (manufactured by FRITSCH GmbH, model number: Premium line PL-7), and an intermediate was thus obtained.

The intermediate was heated (heat-treated) at 450°C for 4 hours, and a solid electrolyte of Example 7 was thus obtained.

### [Example 8 and Comparative Example 7]

Solid electrolytes of Example 8 and Comparative Example 7 were obtained similarly to Example 5 except that the types of raw material compounds, the molar ratio therebetween, and the heat treatment temperature were set as shown in Table 5.

### [X-ray diffraction measurement]

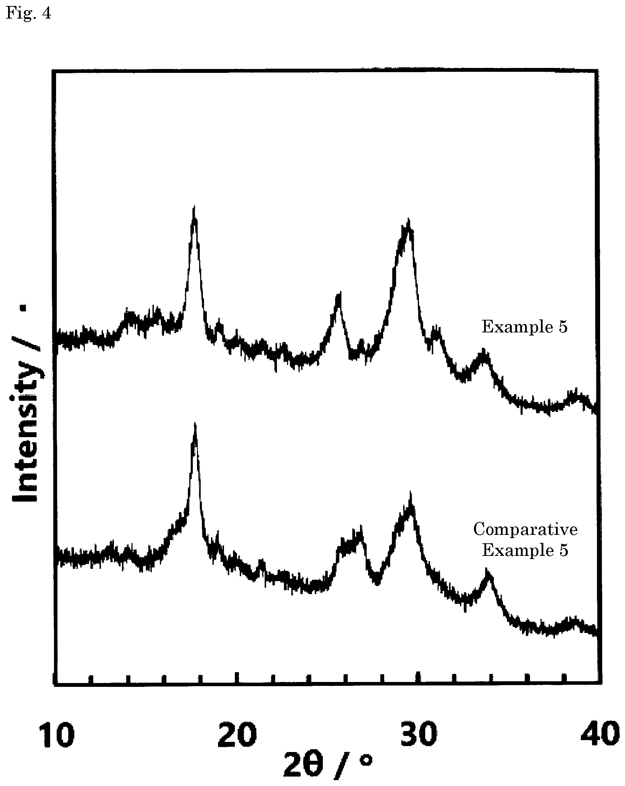

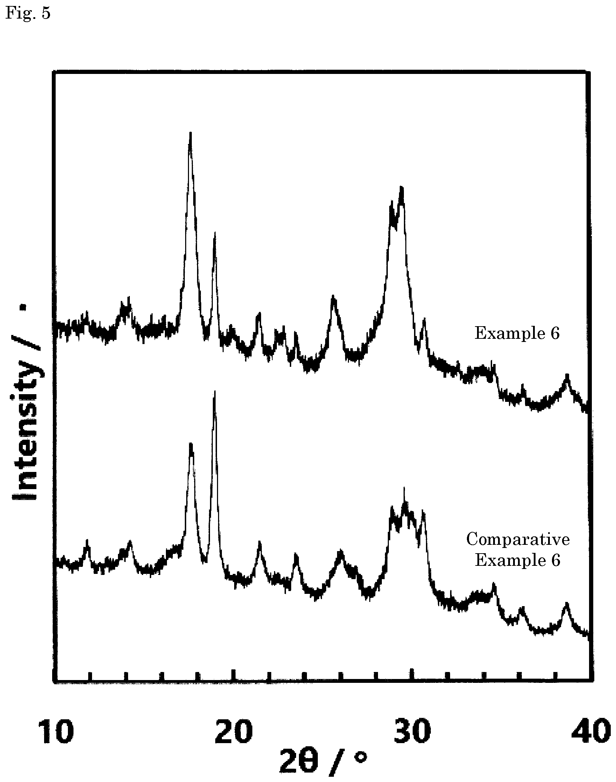

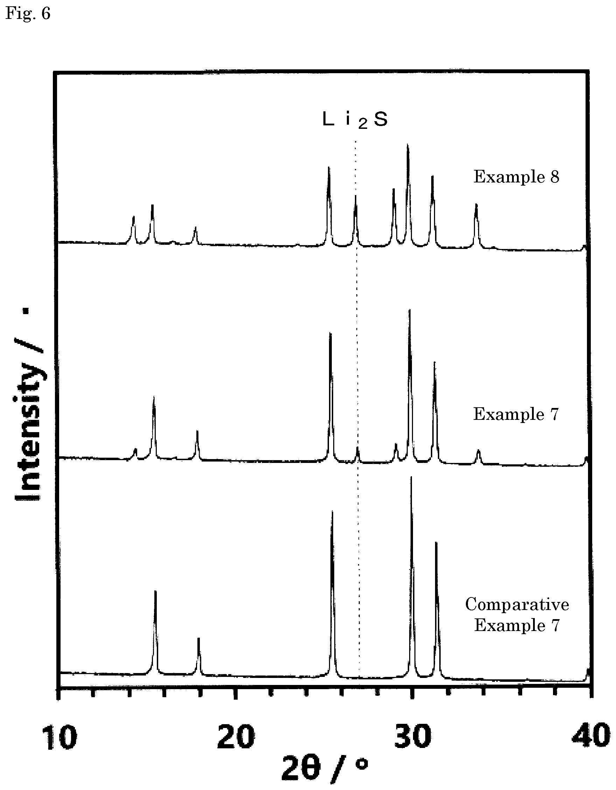

The solid electrolytes of Example 5 to 8 and Comparative Examples 5 to 7 were subjected to powder X-ray diffraction measurement performed by the method described above. Figs. 4 to 6 illustrate X-ray diffraction diagrams obtained. It could be confirmed that the solid electrolytes of Examples 5 and 6 and Comparative Examples 5 and 6 had the crystal structure α (the crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5°, any of the different diffraction peaks being a maximum diffraction peak), and the solid electrolytes of Examples 7 and 8 and Comparative Example 7 had the crystal structure β (argyrodite-type crystal structure). Further, the solid electrolytes of Examples 7 and 8 had diffraction peaks respectively in a 2θ range of 14.4° ± 0.5° and a 2θ range of 29.1° ± 0.5° in an X-ray diffraction diagram using CuKa radiation.

### [Measurement of ion conductivity]

The ion conductivity at 25°C (σ₂₅) of the solid electrolytes of Examples 5 to 8 and Comparative Examples 5 to 7 was determined by measuring the alternating-current impedance by the method described above, using "VMP-300" manufactured by Bio-Logic Science Instruments. Tables 4 and 5 show the measurement results.

### [Evaluation of oxidation resistance]

The following measurement cells were prepared using the solid electrolytes of Examples 5 to 8 and Comparative Examples 5 to 7, subjected to square wave voltammetry (SWV) measurement, and evaluated for oxidation resistance on the basis of the peak current I_{MAX}.

Under an argon atmosphere with a dew point of -50°C or lower, 80 mg of a sample powder (solid electrolyte to be measured) were put into a powder molder of 10 mm in inner diameter, and then subjected to uniaxial pressure molding at 50 MPa or less, using a hydraulic press. After releasing the pressure, the sample had a graphite powder put onto an upper surface thereof, and then was subjected again to uniaxial pressure molding at 360 MPa for 5 minutes, using a hydraulic press. Next, the sample had a metal foil disposed on a lower surface thereof, the metal foil being obtained by attaching a metallic lithium foil to a metallic indium foil, and then was subjected to uniaxial pressure molding at 50 MPa or less. A pellet measurement cell was thereby obtained. This measurement cell was subjected to SWV measurement under the following measurement conditions while pressed in the stacking direction, with a pressing jig at a torque of 50 cNm.

### (SWV measurement conditions)

Voltage amplitude: 20 mV
Relaxation time: 50 ms
Step voltage: 1 mV
Voltage range: OCV to 4.5 V
Measurement temperature: 50°C

Tables 4 and 5 show the peak currents I_{MAX} measured. The measurement cell having a small peak current I_{MAX} can be determined to have higher oxidation resistance.

**[Table 4]**

| | Raw material compounds (molar ratio) | | | | | Solid electrolyte | Heat treatment temperature /°C | *δ*₂₅ /mS/cm | I_{MAX} / µA |
|---|---|---|---|---|---|---|---|---|---|
| | Li₂S | P₂S₅ | Li_{1.5}Al_{0.5}N | Li₃N | LiCl | Composition formula | | | |
| Comparative Example 5 | 52.50 | 25.00 | 0.00 | 15.00 | 0.00 | Li_{3.00}PS_{3.55}N_{0.30} | 310 | 1.1 | 20.1 |
| Example 5 | 47.25 | 22.50 | 0.00 | 13.50 | 10.00 | Li_{3.22}PS_{3.55}N_{0.30}Cl_{0.22} | 310 | 0.8 | 12.0 |
| Comparative Example 6 | 56.00 | 24.00 | 20.00 | 0.00 | 0.00 | Li_{2.96}PS_{3.67}Al_{0.21}N_{0.42} | 320 | 1.8 | 21.3 |
| Example 6 | 50.40 | 21.60 | 18.00 | 0.00 | 10.00 | Li_{3.19}PS_{3.67}Al_{0.21}N_{0.42}Cl_{0.23} | 270 | 1.5 | 18.4 |

**[Table 5]**

| | Raw material compounds (molar ratio) | | | | | Solid electrolyte | Heat treatment temperature /°C | *δ*₂₅ /mS/cm | I_{MAX} / µA |
|---|---|---|---|---|---|---|---|---|---|
| | Li₂S | P₂S₅ | Li_{1.5}Al_{0.5}N | Li₃N | LiCl | Composition formula | | | |
| Comparative Example 7 | 62.50 | 12.50 | 0.00 | 0.00 | 25.00 | Li_{6.00}PS_{5.00}Cl_{1.00} | 500 | 3.3 | 7.9 |
| Example 7 | 60.00 | 12.50 | 0.00 | 2.50 | 25.00 | Li_{6.10}PS_{4.90}N_{0.10}Cl_{1.00} | 450 | 2.1 | 4.7 |
| Example 8 | 56.25 | 12.50 | 0.00 | 6.25 | 25.00 | Li_{6.25}PS_{4.75}N_{0.25}Cl_{1.00} | 450 | 0.5 | 5.1 |

As shown in Table 4, the solid electrolyte of Example 5 having the chlorine element added thereto is, from the values of I_{MAX}, understood to have higher oxidation resistance than the oxidation resistance of the solid electrolyte of Comparative Example 5. Similarly, the solid electrolyte of Example 6 having the chlorine element added thereto is also understood to have higher oxidation resistance than the oxidation resistance of the solid electrolyte of Comparative Example 6. Also, as shown in Table 5, the solid electrolytes of Examples 7 and 8 having the nitrogen element added thereto are understood to have higher oxidation resistance than the oxidation resistance of the solid electrolyte of Comparative Example 7. It can be confirmed that by containing both the nitrogen element and the chlorine element, the solid electrolyte has higher oxidation resistance. By comparing Example 5 with Example 6, it can be confirmed that when containing the aluminum element as the element M, the solid electrolyte has higher ion conductivity.

### [Example 9]

A solid electrolyte of Example 9 satisfying the composition ratio shown in Table 6 was synthesized by the following treatment.

In a glove box of an argon atmosphere with a dew point of -50°C or lower, Li₂S (99.98%, Aldrich), P₂S₅ (99%, manufactured by Aldrich), Li_{1.5}Al_{0.5}N, and LiCI (99.999%, manufactured by Aldrich) were weighed at a molar ratio of 50.4 : 21.6 : 18.0 : 10.0, and then mixed in a mortar to prepare a composition containing a sulfur element, a nitrogen element, a chlorine element, a phosphorus element, a lithium element as the element A, and an aluminum element as the element M.

The composition (3.5 g) was put into a closed 250-mL zirconia pot containing 500 g of zirconia balls of 4 mm in diameter. A mechanical milling treatment was performed for 45 hours at the number of revolutions of 370 rpm by a planetary ball mill (manufactured by FRITSCH GmbH, model number: Classic line P-5).

Next, the composition (1.0 g) having undergone the treatment was put into a closed 80-mL zirconia pot containing 50 g of zirconia balls of 0.3 mm in diameter. A mixed solution of heptane and dibutyl ether (mass ratio 8 : 2) was further added into this zirconia pot, a pulverization treatment using a wet mill was performed for 20 hours at the number of revolutions of 150 rpm by a planetary ball mill (manufactured by FRITSCH GmbH, model number: Premium line PL-7), and an intermediate was thus obtained.

The intermediate was heated (heat-treated) at 270°C for 2 hours, and a solid electrolyte of Example 9 was thus obtained.

### [Comparative Example 8]

A solid electrolyte of Comparative Example 8 satisfying the composition ratio shown in Table 6 was obtained similarly to Example 9 except that LiCl was not used as a raw material compound and the intermediate was heated (heat-treated) at 320°C for 2 hours.

### [X-ray diffraction measurement]

The solid electrolytes of Example 9 and Comparative Example 8 were subjected to powder X-ray diffraction measurement performed by the method described above. It could be confirmed that both the solid electrolytes had the crystal structure a (the crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5°, any of the different diffraction peaks being a diffraction peak of a maximum diffraction).

### [Measurement of ion conductivity]

The ion conductivity at 25°C (σ₂₅) of the solid electrolytes of Example 9 and Comparative Example 8 was determined by measuring the alternating-current impedance by the method described above, using "VMP-300" manufactured by Bio-Logic Science Instruments. Table 6 shows the measurement results. The solid electrolytes of Example 9 and Comparative Example 8 have the same elemental composition and crystal structure as the solid electrolytes of Example 6 and Comparative Example 6, but are different therefrom in being subjected to the pulverization treatment.

### [Preparation of energy storage device]

Particles of LiNi_{0.5}Co_{0.2}Mn_{0.3}O₂ having surfaces thereof coated with LiNbO₃ were used as a positive active material. The positive active material, the solid electrolyte of Example 9 or Comparative Example 8, an argyrodite-type solid electrolyte, fibrous carbon ("VGCF (registered trade name)" manufactured by Showa Denko K.K.) as a conductive agent, and styrene butadiene rubber (SBR) as a binder were mixed at a mass ratio of 76 : 4 : 16 : 2 : 2 to prepare a positive mix. Further, an argyrodite-type solid electrolyte that is a solid electrolyte was prepared as an isolation layer material. Using an aluminum foil as a positive substrate, the positive mix, the isolation layer material, and a negative electrode obtained by attaching a metallic lithium foil to a metallic indium foil, an energy storage device (test cell) was prepared that had a layer structure of a positive electrode, an isolation layer, and the negative electrode.

### [Charge-discharge test]

The energy storage devices obtained were subjected to a charge-discharge test at 50°C in the following manner. Constant current constant voltage charge was performed at a current of 0.1 C and an end-of-charge voltage of 3.75 V. A charge termination condition was performing the charge until the current reached 0.025 C. This was followed by a break period of 10 minutes. Thereafter, constant current discharge was performed at a current of 0.1 C and an end-of-discharge voltage of 2.25 V. The ratio of the discharge capacity to the initial charge capacity was determined as initial charge-discharge efficiency.

Next, the energy storage devices were charged and discharged similarly to described above except that the constant current discharge was performed at a current of 3 C. The ratio of the discharge capacity at a current of 3C to the discharge capacity at 0.1 C was determined as a high-rate discharge capacity ratio.

Next, the energy storage devices were subjected to a charge-discharge cycle test performed in the following manner. Constant current constant voltage charge was performed at a current of 0.2 C and an end-of-charge voltage of 3.75 V. A charge termination condition was performing the charge until the current reached 0.05 C. This was followed by a break period of 10 minutes. Thereafter, constant current discharge was performed at a current of 0.2 C and an end-of-discharge voltage of 2.25 V. This was followed by a break period of 10 minutes. This charge-discharge was performed 50 cycles. The ratio of the discharge capacity of the 50th cycle to the discharge capacity of the first cycle was determined as a capacity retention ratio.

Table 6 shows the results of the initial charge-discharge efficiency, the high-rate discharge capacity ratio, and the capacity retention ratio.

**[Table 6]**

| | Solid electrolyte | *δ*₂₅ /mS/cm | Initial charge-discharge efficiency /% | High-rate discharge capacity ratio /% | Capacity retention ratio /% |
|---|---|---|---|---|---|
| Example 9 | Li_{3.19}PS_{3.67}Al_{0.21}N_{0.42}Cl_{0.23} (90(0.8(0.7Li₂S·0.3P₂S₅)-0.2Li_{1.5}Al_{0.5}N)·10LiCl) | 1.1 | 83.7 | 68.4 | 90.5 |
| Comparative Example 8 | Li_{2.96}PS_{3.67}Al_{0.21}N_{0.42} (80(0.7Li₂S·0.3P₂S₅)·20Li_{1.5}Al_{0.5}N) | 1.0 | 82.2 | 56.5 | 88.5 |

As shown in Table 6, the energy storage device that included the positive electrode containing the solid electrolyte of Example 9 was higher in all of the initial charge-discharge efficiency, the high-rate discharge capacity ratio, and the capacity retention ratio than the energy storage device that included the positive electrode containing the solid electrolyte of Comparative Example 8, and the energy storage device that included the positive electrode containing the solid electrolyte of Example 9 exhibited good charge-discharge performance. For example, since the solid electrolytes of Example 9 and Comparative Example 8 had the same level of ion conductivity, the solid electrolyte of Example 9 is presumed to have increased the charge-discharge performance by having higher oxidation resistance.

The solid electrolyte according to the present invention is suitably used as a solid electrolyte for an energy storage device such as an all-solid-state battery. The solid electrolyte, according to the present invention, for a positive electrode is suitably used as a solid electrolyte for an energy storage device such as an all-solid-state battery.

### DESCRIPTION OF REFERENCE SIGNS

1: Positive electrode
2: Negative electrode
3: Isolation layer
4: Positive substrate
5: Positive active material layer
6: Negative active material layer
7: Negative substrate
10: Energy storage device (all-solid-state battery)
20: Energy storage unit
30: Energy storage apparatus

## Claims

1. A solid electrolyte comprising a sulfur element, a nitrogen element, and a chlorine element, and
having at least one crystal structure between a crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKa radiation, any of the different diffraction peaks being a maximum diffraction peak, and an argyrodite-type crystal structure.

2. The solid electrolyte according to claim 1, having the crystal structure having different diffraction peaks respectively in a 2θ range of 17.9° ± 0.5° or 19.1° ± 0.5°, in a 2θ range of 29.1° ± 0.5°, and in a 2θ range of 29.8° ± 0.5° in an X-ray diffraction diagram using CuKa radiation, any of the different diffraction peaks being a maximum diffraction peak.

3. The solid electrolyte according to claim 2, further comprising a phosphorus element, an element A, and an element M, wherein
the element A is at least one selected from the group consisting of a lithium element, a sodium element, and a potassium element, and
the element M is at least one selected from the group consisting of an aluminum element, a tantalum element, a silicon element, a scandium element, a magnesium element, a niobium element, a boron element, a hafnium element, a carbon element, a zirconium element, and a titanium element.

4. The solid electrolyte according to claim 2, being represented by a following formula (1):
AₐPS_{b}M_{c}N_{d}ClₑX_{f} ··· (1)
in the formula (1), A is at least one selected from the group consisting of Li, Na, and K; M is at least one selected from the group consisting of Al, Ta, Si, Sc, Mg, Nb, B, Hf, C, Zr, and Ti; X is at least one element other than A, P, S, M, N, and Cl; and a, b, c, d, e, and f respectively satisfy 2 ≤ a ≤ 4, 2 ≤ b ≤ 5, 0 ≤ c ≤ 1, 0.01 ≤ d ≤ 2, 0.01 ≤ e ≤ 1, and 0 ≤ f ≤ 1.

5. The solid electrolyte according to claim 4, wherein, in the formula (1), e satisfies 0.01 ≤ e ≤ 0.5.

6. A solid electrolyte represented by a following formula (1) and having a crystal structure:
AₐPS_{b}M_{c}N_{d}ClₑX_{f} ··· (1)
in the formula (1), A is at least one selected from the group consisting of Li, Na, and K; M is at least one selected from the group consisting of Al, Ta, Si, Sc, Mg, Nb, B, Hf, C, Zr, and Ti; X is at least one element other than A, P, S, M, N, and Cl; and a, b, c, d, e, and f respectively satisfy 2 ≤ a ≤ 4, 2 ≤ b ≤ 5, 0 ≤ c ≤ 1, 0.01 ≤ d ≤ 2, 0.01 ≤ e ≤ 1, and 0 ≤ f ≤ 1.

7. The solid electrolyte according to claim 6, wherein, in the formula (1), e satisfies 0.01 ≤ e ≤ 0.5.

8. A positive electrode for an energy storage device, the positive electrode comprising the solid electrolyte according to any one of claims 1 to 7.

9. An energy storage device comprising the solid electrolyte according to any one of claims 1 to 7.

10. The solid electrolyte according to claim 1, being for a positive electrode.

11. The solid electrolyte according to claim 10, further comprising a phosphorus element and an element A, wherein
the element A is at least one selected from the group consisting of a lithium element, a sodium element, and a potassium element.

12. The solid electrolyte according to claim 10 or 11, further comprising an element M, wherein
the element M is at least one selected from the group consisting of an aluminum element, a tantalum element, a silicon element, a scandium element, a magnesium element, a niobium element, a boron element, a hafnium element, a carbon element, a zirconium element, and a titanium element.

13. The solid electrolyte according to claim 10 or 11, being represented by a following formula (2):
AₐPS_{b}M_{c}N_{d}ClₑX_{f} ··· (2)
in the formula (2), A is at least one selected from the group consisting of Li, Na, and K; M is at least one selected from the group consisting of Al, Ta, Si, Sc, Mg, Nb, B, Hf, C, Zr, and Ti; X is at least one element other than A, P, S, M, N, and Cl; and a, b, c, d, e, and f respectively satisfy 2 ≤ a ≤ 7, 2 ≤ b ≤ 6, 0 ≤ c ≤ 1, 0.01 ≤ d ≤ 2, 0.01 ≤ e ≤ 2, and 0 ≤ f ≤ 1.

14. The solid electrolyte according to claim 13, wherein, in the formula (2), e satisfies 0.01 ≤ e ≤ 0.5.

15. The solid electrolyte according to claim 10 or 11, having the argyrodite-type crystal structure, and
having a diffraction peak in at least one of a 2θ range of 14.4° ± 0.5° or a 2θ range of 29.1° ± 0.5° in an X-ray diffraction diagram using CuKa radiation.

16. A solid electrolyte for a positive electrode, the solid electrolyte being represented by a following formula (2) and having a crystal structure:
AₐPS_{b}M_{c}N_{d}ClₑX_{f} ··· (2)
in the formula (2), A is at least one selected from the group consisting of Li, Na, and K; M is at least one selected from the group consisting of Al, Ta, Si, Sc, Mg, Nb, B, Hf, C, Zr, and Ti; X is at least one element other than A, P, S, M, N, and Cl; and a, b, c, d, e, and f respectively satisfy 2 ≤ a ≤ 7, 2 ≤ b ≤ 6, 0 ≤ c ≤ 1, 0.01 ≤ d ≤ 2, 0.01 ≤ e ≤ 2, and 0 ≤ f ≤ 1.

17. The solid electrolyte according to claim 16, wherein, in the formula (2), e satisfies 0.01 ≤ e ≤ 0.5.

18. A composite formed from a positive active material and the solid electrolyte according to claim 10 or 16.

19. The composite according to claim 18, being composite particles including particles of the positive active material, the particles having at least a part of surfaces thereof coated with the solid electrolyte.

20. A positive electrode for an energy storage device, the positive electrode comprising the solid electrolyte according to claim 10 or 16.

21. An energy storage device comprising the solid electrolyte according to claim 10 or 16.
